(19) Europäisches Patentamt
European Patent Office
Office européen des brevets

(11) **EP 4 485 293 A1**

(12) **EUROPEAN PATENT APPLICATION**

(43) Date of publication:
**01.01.2025 Bulletin 2025/01**

(21) Application number: **23182499.6**

(22) Date of filing: **29.06.2023**

(51) International Patent Classification (IPC):
**G06N 10/60** $^{(2022.01)}$     **G06N 10/20** $^{(2022.01)}$
**G06N 3/0475** $^{(2023.01)}$    **G06N 3/065** $^{(2023.01)}$
**G06N 3/08** $^{(2023.01)}$

(52) Cooperative Patent Classification (CPC):
**G06N 10/20; G06N 10/60;** G06N 3/0475;
G06N 3/065; G06N 3/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal Netherlands B.V.**
**1076 ED Amsterdam (NL)**

(72) Inventors:
• **Williams, Chelsea Anita**
**1076 ED Amsterdam (NL)**

• **Paine, Anna Emma**
**1076 ED Amsterdam (NL)**
• **Wu, Hsin-Yu**
**1076 ED Amsterdam (NL)**
• **Elfving, Vincent Emanuel**
**1076 ED Amsterdam (NL)**
• **Kyriienko, Oleksandr**
**1076 ED Amsterdam (NL)**

(74) Representative: **De Vries & Metman**
**Overschiestraat 180**
**1062 XK Amsterdam (NL)**

(54) **QUANTUM CHEBYSHEV ENCODING**

(57)     Methods and systems are disclosed for manipulating quantum data in the Chebyshev basis. The method comprises formulating one or more quantum circuits including a Chebyshev feature map comprising gate operations for encoding one or more input features in a Hilbert space of quantum elements of a quantum register. The gate operations are configured to encode the one or more classical input features in amplitudes of a set of orthogonal basis states of the quantum register, wherein the amplitudes are based on one or more Chebyshev polynomials.

This also includes a method for executing a Chebyshev transform on a quantum processor comprising a quantum register. The method comprises preparing the quantum register in a first state representing a computational basis state; formulating a transform circuit configured to map a computational basis state to a Chebyshev basis state; and applying the transform circuit to the quantum register.

Fig. 4A $\quad \tilde{P}_{2^j}^s(x) = P_{2^j}(s \arccos x) = \mathrm{diag}\left[1, \exp\left(\mathrm{i}\, s \frac{N}{2^j} \arccos x\right)\right]$

## Description

Technical field

The disclosure relates to data encoding in quantum computing systems, and in particular, though not exclusively, to methods and systems for encoding data quantum computing systems, and to a computer program product enabling a computer system to perform such methods.

Background

Quantum computers or quantum processing units (QPUs) change the way information is processed. For certain problems they offer drastic computational speed up, ranging from quadratic acceleration of searching unstructured data, to exponential improvements for factoring large numbers used in encryption applications. Using qubits and coherent superpositions of binary strings, QPUs utilize quantum interference effects to amplify the correct solution, reached in fewer steps than classical computers ever can. QPU-based computers are well-suited for chemistry applications, as they are naturally suitable for the simulation of certain quantum processes. At the same time, QPU-based computers are not directly suited for all computational problems, and can be seen as specialized machines (akin to GPUs), that need to be tailored to the problem at hand. Designing these machines and their operational schedule is crucial for solving problems faster than any available classical methods. This remains true for tasks and applications in, e.g., machine learning.

A class of tasks that has recently received much attention is Quantum Machine Learning (QML). Quantum machine learning is a field at the interface of artificial intelligence and quantum information processing, focussing on manipulation of quantum data. In general, quantum machine learning aims to build quantum models that efficiently solve certain machine-learning problems. A quantum machine learning model can be considered a quasi-probability distribution created by a quantum circuit, optionally followed by measurement post-processing. Typically, the goal is to prepare expressive and trainable quantum models using high-dimensional (exponentially large) Hilbert spaces. However, this is challenging because high expressivity can lead to poor trainability (barren plateaus) and difficulties with generalization.

These quantum models are, essentially, complex, highly non-linear functions that map an input to an output. However, the functions that can be modelled efficiently depend on the parameters of the quantum machine learning model. As the set of currently available operations for quantum processing units is limited, current quantum machine learning models are similarly limited; that is, quantum machine learning models can only model functions for which corresponding quantum circuits are known. In particular, there is a need for algorithms that can better (more naturally/directly) approximate certain classes of functions, e.g., polynomials, than current quantum machine learning models.

M. Schuld et al., 'Quantum machine learning in feature Hilbert spaces', Phys. Rev. Lett. 122 (2019) 040504 describes various feature encoding maps in a mathematical way. However, this paper only gives a mathematical description, and does not provide a way to practically implement the described feature maps, i.e., the paper does not provide explicit quantum circuits. More importantly, the discussed feature maps do not combine analytical differentiability with amplitude encoding, and they are not optimal for certain classes of problems.

WO 2022/101483 A1 discloses two feature maps that are referred to as "Chebyshev feature map" and "Chebyshev tower feature map", respectively. However, these are phase-encoded feature maps with a non-zero imaginary part, rather than (real) amplitude-encoded feature maps. Furthermore, these known feature maps do not map an input value on a vector (wavefunction) associated with an orthonormal (or even orthogonal) basis.

Hence, from the above, it follows that there is a need in the art for a system and method for a new quantum feature map.

Summary

It is an aim of embodiments in this disclosure to provide a system and method for encoding data on quantum hardware that avoids, or at least reduces the drawbacks of the prior art.

In a first aspect, embodiments in this disclosure relate to a method for encoding one or more data points $x$ in a Hilbert space associated with a quantum register of a quantum processor, the quantum register comprising $n$ qubits. The encoding comprises: receiving or determining the one or more data points $x$; and applying a quantum circuit to the quantum register that encodes, for each of the one or more data points $x$, a value $\alpha\, T_k(x)$, $k = 0, ..., N - 1$, in an amplitude of a $k^{th}$ basis state of the quantum register, wherein $N = 2^n$ is a number of available basis states of the quantum register, wherein $T_k$ represents a Chebyshev polynomial of degree $k$, and wherein $\alpha$ is a normalisation factor.

This encoding may be referred to as a Chebyshev feature map. This Chebyshev feature map uses amplitude encoding, with equal phase on each wavefunction amplitude, of the one or more data points. Thus, the resulting wavefunction is completely real-valued, or optionally, complete imaginary, but with no relative phase between them. The one or more data points are encoded in an orthonormal basis of Chebyshev polynomials. As will be explained in more detail below, this Chebyshev feature map can be differentiated analytically, which extends to quantum circuit differentiation.

The quantum processor can be part of a hybrid classical/quantum data processing system, with the classical data processing system controlling the quantum data processing system.

In a further aspect, embodiments in this disclosure relate to a method for solving a computational problem using a hybrid quantum computer system comprising a classical computer and a quantum processor. The method comprises receiving or determining one or more quantum circuits comprising gate operations on quantum elements, e.g., qubits, of the quantum register. The one or more quantum circuits include a Chebyshev feature map comprising gate operations for encoding one or more input features $x$ (for example, one or more data points or function variables, e.g., variables of a differential equation), associated with the computational problem in the Hilbert space of the quantum elements of the quantum register. The gate operations are configured to encode the one or more classical input features $x$ in amplitudes of a set of orthogonal basis states of the quantum register, wherein the amplitudes are based on one or more Chebyshev polynomials of order $k$, $T_k(x), k = 0, ..., N-1$ wherein $N$ is a number of available basis states of the quantum register, typically $N = 2^n$. The one or more quantum circuits may also include a further quantum circuit, for example a variational quantum circuit, comprising gate operations determined by the computational problem. The method further comprises executing the gate operations of the one or more quantum circuit, the execution of the gate operations including translating the gate operations into control signals for controlling the quantum elements of the quantum register and for readout of the quantum elements to obtain hardware measurement data. The method further may comprise determining information associated with a solution to the computational problem based on the hardware measurement data.

In an embodiment, the method comprises receiving or determining a problem description describing the computational problem and receiving or determining one or more data points $x$ related to the computational problem. The method further comprises receiving or determining an encoding quantum circuit to encode the one or more data points $x$ in a Hilbert space associated with a quantum register of a quantum processor of the hybrid quantum computer system. The quantum register comprises (at least) $n$ qubits. The encoding quantum circuit is configured to encode, for each of the one or more data points $x$, a value $\alpha T_k(x), k = 0, ..., N-1$, in an amplitude of a $k^{th}$ basis state of the quantum register, wherein $N = 2^n$ is a number of available basis states of the quantum register, wherein $T_k$ represents a Chebyshev polynomial of degree $k$, and wherein $\alpha$ is a normalisation factor. The method further comprises executing, by the quantum register, the encoding quantum circuit on the quantum register. The method may further comprise receiving or determining one or more additional quantum circuits, based on the problem description and executing, by the quantum register, the one or more additional quantum circuits on the quantum register. The method further comprises receiving measurement data representative of the state of the quantum register; and determining a solution to the computational problem based on the measurement data.

In a typical embodiment, the quantum register comprises at least two qubits, i.e., $n > 1$ (and $N > 2$). The one or more data points $x$ may be rescaled to lie in the interval between minus one and plus one, i.e., $x \in [-1,1]$ for all $x$. The one or more data points may also be referred to as input data.

Thus, embodiments in this disclosure allow to create a paradigm for building quantum models in the space of Chebyshev polynomials. This allows to encode data into quantum states with amplitudes corresponding to Chebyshev polynomials with a degree growing exponentially in the system size. This provides a new way of encoding data in quantum computers, which can provide computational benefits over, e.g., bitstring encoding in the computational basis or Fourier encoding (also known as spectral encoding), depending on the problem being solved. Examples of (classes of) problems that benefit from Chebyshev encoding are discussed below.

Related to Fourier encoding is the well-known quantum Fourier transform, which maps the computational basis space into the phase (Fourier) basis space. These two circuits are closely connected on a conceptual level. Similarly, a quantum Chebyshev transform is described herein, i.e., a quantum circuit for mapping the computational basis space into the Chebyshev basis space. This includes an embedding circuit for generating the orthonormal Chebyshev basis of exponential capacity, represented by a shallow parameterized isometry. The availability of a feature map and an associated transform allows, for example, training of a model on data encoded using that feature map, and subsequent sampling of the trained model using the associated transform. This is described (both in general and specifically for the Fourier feature map / Quantum Fourier Transform) in PCT/EP2023/052998, which is incorporated herein by reference.

Another advantage of the described feature map (for which, as mentioned, an associated transform is also disclosed herein) is that this allows to train quantum machine learning models partially in spectral space and partially in real space.

Because the Chebyshev feature map uses amplitude encoding, models encoded with this encoding scheme can be trained in an efficient manner (e.g. using the Harrow-Hassidim-Lloyd (HHL) algorithm). Yet, contrary to most currently available amplitude encoding schemes, this circuit enables analytical differentiation of the quantum model. This increases the number of use cases for the feature map.

As described in more detail below, the described feature map can be used in combination with the (generalised) parameter shift rule. Moreover, since the derivative of a Chebyshev polynomial is a combination of lower-order Chebyshev polynomial, several derivation schemes can be used, depending on their suitability for the use case at hand. Thus, both a function (or approximation) and its derivative can be expressed analytically. By contrast, for encoding in the computational basis (and similar amplitude encodings), only finite-difference based methods are available, which require complex circuitry for their practical implementation, and which introduce numerical imprecision errors that do not occur for the analytically determined derivatives described herein.

The Chebyshev polynomial can be a Chebyshev polynomial of the first kind or a Chebyshev polynomial of the second kind. In some embodiments, a combination of Chebyshev polynomials of the first and second kind may be used. A Chebyshev polynomial of the first kind of order $k$ may be defined as:

$$T_k(\cos\theta) = \cos(k\,\theta) \text{ or } T_k(x) = \cos(k\arccos x)\,,\ x \in [-1,1] \tag{1}$$

A Chebyshev polynomial of the second kind of order $k$ may be defined as:

$$U_k(\cos\theta) = \frac{\sin((k+1)\,\theta)}{\sin\theta}\,,\ x \in [-1,1] \tag{2}$$

Depending on the computational problem being solved, Chebyshev polynomial of the first or second kind, or a combination thereof, may be best suited to encode the one or more data points.

In an embodiment, the one or more data points $x$ are selected from a Chebyshev grid of degree $N$. A Chebyshev grid of degree $N$ may be defined as either

$$x_j^{\mathrm{Ch}} = x_j^0 = -\cos\left(\left(j+\tfrac{1}{2}\right)\pi/N\right) \tag{3}$$

(known as the roots grid), or as

$$x_j^{\mathrm{Ch}} = x_j^{\mathrm{ext}} = -\cos(j\,\pi/N) \tag{4}$$

(known as the extrema grid), wherein $j$ is a non-negative integer smaller than $N$ for the root grid (i.e., $j = 0,1, ..., N$ - 1) and wherein $j$ is a non-negative integer smaller than or equal to $N$ for the extrema grid (i.e., $j = 0,1, ...,N$). The integer $j$ can be a

$$j(x) = \mathrm{floor}\left(\frac{x-x_{\min}}{x_{\max}-x_{\min}}N\right)$$

function of a data point $x$, e.g.,                 , wherein $x_{\min}$ represents a minimum or infimum value of a range with potential values for the one or more data points, and wherein $x_{\max}$ represents a maximum or supremum value of the range with potential values for the one or more data points.

If the data points correspond to Chebyshev grid points (of either the root grid or the extrema grid), the Chebyshev polynomials form an orthonormal basis, and the normalisation factor $\alpha$ equals one; i.e., in that case, the amplitude of the $k$th basis state becomes $T_k(x)$. The use of an orthonormal basis may simplify computations, and hence lower hardware requirements.

An orthonormal basis moreover spans a maximally large space (in this case, a maximally large functions space), given a fixed (finite) number of basis states. Additionally, the above described combination with the quantum Chebyshev transform is generally combined with an orthonormal feature map.

In an embodiment, the Chebyshev feature map defines gate operations on quantum elements for encoding the one or more input features $x$ and on a quantum element that is used as an ancilla for the encoding quantum elements.

The Chebyshev feature map may include one or more sub-circuits.

For example, the Chebyshev feature map may include a first sub-circuit configured to prepare the quantum elements in a superposition of basis states, e.g., computational basis states.

The Chebyshev feature map may include a second sub-circuit configured to encode the Chebyshev polynomials based on phase gates, wherein at least part of the phase gates are controlled by the ancilla.

The Chebyshev feature map may include a third sub-circuit for adjusting a norm of the zeroth-order Chebyshev polynomial.

The Chebyshev feature map may include a fourth sub-circuit for selecting a sum term based on the state of the ancilla.

For example, the quantum register may comprise $n$ + 1 qubits, with the encoding comprising selecting one of the $n$ + 1 qubits in the quantum register as an ancillary qubit and selecting the $n$ other qubits as encoding qubits. The encoding may further comprise preparing the $n$ + 1 qubits in the quantum register in an initial state, preferably the computational zero

state $|\varnothing\rangle = |0\rangle^{\otimes n+1}$. In such an embodiment, the first sub-circuit may create a superposition of all $2^{n+1} = 2N$ basis states, the second sub-circuit may encode the Chebyshev polynomials $T_k(x)$ in the $n$ encoding qubits, the third sub-circuit may adjust a norm of the zeroth-order Chebyshev polynomial, and the fourth sub-circuit may selecting a sum term.

The step of creating a superposition of all $2^{n+1}$ basis states may comprise applying an Hadamard gate to the 1 ancillary qubit and to the n encoding qubits.

The step of encoding the Chebyshev polynomials $T_k(x)$ in the encoding qubits may comprise applying scaled phase gates $\tilde{P}^{1}_{2^i}(x)$ to the encoding qubits $i = 1, ..., n$, respectively, and applying controlled scaled phase gates $\tilde{P}^{-2}_{2^i}(x)$ to the encoding qubits $i = 1, ..., n$, respectively, wherein the controlled scaled phase gates are controlled by the ancillary qubit. A single-qubit scaled phase gate $\tilde{P}^{s}_{2^j}(x)$ may be defined by

$$\tilde{P}^{s}_{2^j}(x) = P_{2^j}\left(s\,\frac{\arccos x}{\pi}\right) = \mathrm{diag}\left[1, \exp\left(\mathrm{i}\,s\,\frac{N}{2^j}\arccos x\right)\right] \qquad (5)$$

where $j$ is the index of the qubit to which the gate is applied, and where $s = 1$ or $s = -2$.

The step of adjusting a norm of the zeroth-order Chebyshev polynomial may comprise applying a first not-gate to each of the encoding qubits, a controlled rotation-gate $R_Z\left(-\frac{\pi}{2}\right)$ to the ancillary qubit, the controlled gate being controlled by all encoding qubits, and applying a second not-gate to each of the encoding qubits

The step of selecting a sum term may comprise applying an Hadamard gate to the ancillary qubit, and projecting the ancilla qubit on the $|0\rangle$-state.

It has been found that by encoding the Chebyshev polynomials in this way, the method can be performed on currently available hardware, which is typically so-called NISQ hardware (noisy intermediate-scale quantum hardware).

It is noted that, in particular, the step of selecting the sum term may be postponed. This step may be implemented using post-selection. Depending on the used hardware, the projection of the ancilla may collapse the wavefunction for both the ancillary and encoding qubits.

In an embodiment, the computational problem relates to solving one or more equations, for example differential equations. In such an embodiment, the quantum circuit may define gate operations of a trainable quantum model of a target function representing a solution to the one or more one or more equations, and the execution of the quantum circuit may include training a quantum model to approximate the target function by extremising a cost or loss function value.

In an embodiment, the training includes: translating the gate operations of the quantum circuit into control signals for controlling quantum elements of the quantum register and readout of the quantum elements to obtain hardware measurement data; executing the gate operations of the quantum circuit based on the control signals; determining an estimated target function and, optionally, one or more derivatives of the estimated target function based on the hardware measurement data; and computing a loss or cost function value based on the estimated target function and the one or more derivatives of the estimated target function, adjusting one or more variational parameters and repeating the execution of the gate operations of the quantum circuit, and determining of an estimated target function until the computed loss or cost function value indicates that the estimated target function matches a solution to the one or more equations and, optionally, one or more associated boundary conditions.

The derivatives of the estimated target function may be determined with respect to an input variable, and/or with respect to a variational parameter.

In an embodiment, the method further comprises receiving or determining a differentiated quantum circuit, the differentiated quantum circuit comprising gate operations for encoding, for each of the one or more input features $x$, a value $\alpha\,T'_k(x), k = 0, ..., N - 1$ in the amplitudes of the set of basis states of the quantum register, wherein $T'_k(x)$ represents a derivative of the Chebyshev polynomial of order $k$ with respect to the one or more input features. The differentiated quantum circuit may be obtainable by one of:

   applying the parameter shift rule to the encoding quantum circuit;
   performing (mid-)circuit measurements on the encoding quantum circuit with symmetrically shifted input features; or
   determining analytical derivatives for the Chebyshev polynomial of order $k$, $k = 0, ... , N - 1$, expressing the analytical derivatives in terms of lower-order Chebyshev polynomials, and determining a series of quantum circuits configured to encode the lower-order Chebyshev polynomials as an effective unitary transformation.

For example, the value $\alpha\, T_k'(x), k = 0, \ldots, N-1$ may be encoded in the amplitude of the $k^{\text{th}}$ basis state of the quantum register.

Thus, a model based on this encoding can be differentiated analytically at the circuit-level. Access to an analytically determined derivative of the Chebyshev feature map allows solving a wide range of computational problems based on Chebyshev feature map, including solving differential problems, the use of gradient-based optimisation methods such as may be applied in an extremal learning context, et cetera.

In an embodiment, the further quantum circuit comprises a variational quantum circuit. In such an embodiment, the method may further comprise variationally optimising a parameter of the variational quantum circuit by measuring and extremising a cost or loss function value.

The variational quantum circuit may represent, e.g., a quantum neural network. In principle, training a quantum neural network (or optimising some other kind of variational quantum circuit), and using the trained (or optimised) circuit, is known in the art. However, the use of a Chebyshev feature map to encode the input data can allow, depending on the particulars of the computational problem, the training of more accurate models.

In an embodiment, the method further comprises applying a quantum Chebyshev transform to the quantum register. If the Chebyshev feature map as described above has been used to model a statistical distribution, this allows sampling in the computational basis of the modelled statistical distribution. Thus, this can be used in, e.g., (differential) quantum generative modelling.

For example, among various possible applications, the quantum Chebyshev transform can be applied to generative modelling from stochastic differential equations. Learning physically- and financially-motivated distributions, the quantum Chebyshev transform may be performed for efficient sampling of these distributions in an extended computational basis; that is, the sampling may use a larger number of qubits than the training, leading to an increased granularity of the samples without increasing the training time.

In such an embodiment, the method may further comprise receiving or determining a formulation of a quantum circuit representing a Quantum Chebyshev Transform.

An embodiment relates to a method for sampling a generative model associated with a probability density function, PDF, in one or more dimensions, the probability density function being parameterized by a possibly higher-dimensional variable and, optionally, one or more further parameters, such as time. The method uses a hybrid data processing system comprising a classical computer and a quantum register. The method comprises receiving or determining a trained quantum neural network, QNN, the trained QNN being describable by a Chebyshev feature map for encoding the variable and a first parameterized quantum circuit, the trained QNN modelling the probability density function; and executing a sampling process, the sampling process including generating, by the quantum processor, samples based on the modelled probability density function. The generation of samples comprises preparing the quantum register of the quantum processor in an initial state; applying a second parameterized quantum circuit to the quantum register, the second parameterized quantum circuit comprising an inverse (e.g., Hermitian conjugate) of the first parametrized quantum circuit of the trained QNN; applying a quantum Chebyshev transform circuit, and measuring the quantum register in a computational basis associated with the Chebyshev feature map, yielding bitstrings as measurement results, each bitstring representing a sample based on the modelled probability density function.

In an embodiment, determining the trained QNN comprises receiving a set of information about a distribution function associated with the probability density function, the set of information including measurements of a stochastic process and/or an explicit or implicit functional description of the distribution function; and executing a training process for training the QNN using training data based on the set of information and a loss function, the training process comprising execution of the QNN on the quantum register. The execution of the QNN comprising preparing the quantum register of the quantum processor in the initial state; applying a quantum circuit defining the Chebyshev feature map to the quantum register; applying the first parameterized quantum circuit to the quantum register, the first parameterized quantum circuit being associated with variational parameters; and measuring a cost function value on the quantum register, the cost function value representing the output of the QNN.

Some of the embodiments in this disclosure present a practical implementation of a Chebyshev feature map. Some embodiments in this disclosure present a practical implementation of a quantum Chebyshev transform. Such practical implementation may comprise a concrete set of hardware pulses/operations known as 'quantum gates'. This allows these algorithms to be implemented on actual quantum hardware, instead of (mere) simulations. The workflow for implementing these encodings and transforms on a quantum hardware device allow for significant utility and improvement of existing and future quantum algorithms, opening up further the potential for quantum advantage.

It is noted that the proposed quantum circuit for the quantum Chebyshev transform needs only a polylogarithmic number of operations. This represents a great potential increase in computational speed compared to current classical implementations.

Thus, in an aspect, this disclosure relates to a method for executing a Chebyshev transform on a quantum register of a hybrid quantum computer system. The method comprises preparing the quantum register in a first state representing a computational basis state, receiving or determining a transform quantum circuit comprising gate operations on quantum elements (e.g., qubits) of the quantum register, the transform quantum circuit comprising gate operations configured to map a computational basis state to a Chebyshev basis state, and executing the gate operations of the transform quantum circuit. The execution of the gate operations may include translating the gate operations into control signals for controlling the quantum elements of the quantum register and, optionally, for readout of the quantum elements to obtain hardware measurement data.

The quantum register may comprise at least n qubits. A unitary representation of the transform quantum circuit $\hat{U}_{QChT}$ may be given by

$$\hat{U}_{QChT}(n) = \sum_{j=0}^{N-1} \left| \tau\left(x_j^{Ch}\right) \right\rangle \langle j| \tag{6}$$

wherein $N$ represents the number of basis states, $\left| \tau\left(x_j^{Ch}\right) \right\rangle$ represents a Chebyshev basis state with index $j$, and $\langle j|$ represents a computational basis state with index $j$. Typically, $N = 2^n$.

Mathematical objects known as 'transforms' are tools used in a broad range of engineering and science applications. These transforms map a function from its original function space into another function space. There are many classes of problems that are difficult to solve in the original function space, but much easier in the other function space.

An example of a well-known transform is the Fourier Transform. This transform maps between real space and phase space ('reciprocal space').

Quantum computers are special-purpose hardware devices that, when executing specific sets of instructions, may present a fundamental scaling advantage in solving certain types of computational problems. Sequences of operations performed on such devices for specific purposes are known as 'quantum algorithms'. Many such algorithms are based on subroutines (smaller sequences) which perform specific subtasks of the overall problem. One well-known subroutine, found in algorithms like Shor's algorithm, HHL and the Quantum Phase Estimation algorithms, is known as the Quantum Fourier Transform. This sequence of operations effectively applies a Discrete Fourier Transform over the qubit register.

The purpose of using such transform is to manipulate data and information in a basis that 'makes sense' for the purposes of the application. Fourier decomposition makes sense in applications where oscillations and periodic functions need to be approximated. Conversely, some applications find better connections with polynomial expansion.

As an example, within the context of differentiable generative modelling (DQGM), Fourier encoding (also known as spectral encoding) allows for analytical differentiation of the model, which in turn allows for efficient variational solving of differential equations. However, there are limitations to the capacity to express and train quantum models based on Fourier encoding. Some target distributions are difficult to represent with (a limited set of) Fourier functions. Instead, one would like to consider alternative encodings to represent such difficult distributions. The Chebyshev feature map presents such an alternative encoding. The associated quantum Chebyshev transform allows efficient sampling in a generative modelling context.

In an embodiment, the Chebyshev basis is defined on the roots grid. In such an embodiment, the transform quantum circuit may define gate operations on data quantum elements in the first state and on a quantum element that is used as an ancilla for the data quantum elements.

The transform quantum circuit may include one or more sub-circuits.

The transform quantum circuit may comprise a first sub-circuit for creating a Bell state between the ancilla qubit and the data qubits.

The transform quantum circuit may comprise a second sub-circuit for transforming from real space to spectral space.

The transform quantum circuit may comprise a third sub-circuit for making the relative phases between all basis states either purely real or purely imaginary.

The transform quantum circuit may comprise a fourth sub-circuit for permuting the data qubits to reorder amplitudes of the conditioned states.

The transform quantum circuit may comprise a fifth sub-circuit for making the relative phases between all basis states either purely real or purely imaginary.

For example, the quantum register may comprise at least n + 1 qubits and the method may further comprise selecting 1 of the $n + 1$ qubits in the quantum register as an ancillary qubit and selecting the $n$ other qubits as data qubits.

The first sub-circuit may comprise applying an Hadamard to the ancillary qubit and a controlled-not gate to each of the n data qubits. The controlled-not gate is controlled by the ancilla. The sequence of controlled-not gates applied to each of the *n* data qubits is also known as a CNOT ladder.

The second sub-circuit may comprise applying a quantum Fourier transform to the *n* + 1 qubits. Several implementations for the second sub-circuit are known in the art.

The third sub-circuit may comprise applying a rotation gate $R_Z\left(\frac{1}{2^j}\frac{\pi}{4}\right)$ to the n data qubits, where *j* = 0, ..., *n* - 1 is the index of the *j*th qubit. The third sub-circuit may further comprise applying a first unitary operator $U_1 = P\left(-\frac{\pi}{2}N\right)R_Z\left(-\pi\frac{N-1}{2N}\right)$ to the ancillary qubit.

The fourth sub-circuit may reorder the amplitudes of the conditioned states such that $|1\rangle_a|\Phi\rangle \rightarrow |1\rangle_a|(\Phi + N - 1)$ mod *N*), where $N = 2^n$ represents the number of states.

The fifth sub-circuit may comprise applying an Hadamard gate to the ancillary qubit and a controlled-not gate to each of the n data qubits, i.e. a second CNOT ladder controlled by the ancillary qubit. The fifth sub-circuit may further comprise applying a second unitary operator $U_2 = P\left(-\frac{\pi}{2}\right)R_Y\left(-\frac{\pi}{2}\right)$ to the ancillary qubit and applying a zero-controlled rotation-gate $R_X\left(\frac{\pi}{2}\right)$ to the ancillary qubit, the controlled gate being controlled by all data qubits. A zero-controlled gate corresponds to a sequence of a first not-gate applied to each of the controlling qubits, the controlled gate (controlled by the 11) state), and a second not-gate applied to each of the controlling qubits.

In a different embodiment, the Chebyshev basis is defined on the extrema grid. In such an embodiment, transform quantum circuit defines gate operations on data quantum elements in the first state and on a quantum element that is used as an ancilla for the data quantum elements.

The transform quantum circuit may include one or more sub-circuits.

The transform quantum circuit may comprise a first sub-circuit for making the relative phases between all basis states either purely real or purely imaginary.

The transform quantum circuit may comprise a second sub-circuit for permuting the data qubits

The transform quantum circuit may comprise a third sub-circuit for transforming from real space to spectral space

The transform quantum circuit may comprise a fourth sub-circuit for permuting the data qubits.

The transform quantum circuit may comprise a fifth sub-circuit for making the relative phases between all basis states either purely real or purely imaginary.

For example, the quantum register may comprise at least *n* + 1 qubits and the method may further comprise selecting 1 of the *n* + 1 qubits in the quantum register as an ancillary qubit and selecting the n other qubits as data qubits.

The first sub-circuit may comprise applying a unitary operator $U_{ext} = R_X\left(-\frac{\pi}{2}\right)P\left(-\frac{\pi}{2}\right)$ to the ancillary qubit, and applying a zero-controlled daggered (i.e., Hermitian conjugate) version of the unitary operator $U_{ext}^\dagger = P\left(\frac{\pi}{2}\right)R_X\left(\frac{\pi}{2}\right)$, the unitary operator being controlled by all data qubits, and applying a first controlled-not gate to each of the *n* data qubits.

The third sub-circuit may comprise applying a quantum Fourier transform to the *n* + 1 qubits.

The fifth sub-circuit may comprise applying a first controlled-not gate to each of the n data qubits and applying a zero-controlled version of the unitary operator $U_{ext} = R_X\left(-\frac{\pi}{2}\right)P\left(-\frac{\pi}{2}\right)$ to the ancillary qubit, the unitary operator being controlled by all data qubits, and applying the daggered version of the unitary operator $U_{ext}^\dagger = P\left(\frac{\pi}{2}\right)R_X\left(\frac{\pi}{2}\right)$ to the ancillary qubit.

In an aspect, the disclosure relates to a method for executing an inverse Chebyshev transform on a quantum register of a hybrid quantum computer system. The method comprises preparing the quantum register in a first state representing a Chebyshev basis state; receiving or determining an inverse transform quantum circuit comprising gate operations on quantum elements of the quantum register, the inverse transform quantum circuit comprising gate operations configured to map a Chebyshev basis state to a computational basis state, and executing the gate operations of the inverse transform quantum circuit, the execution of the gate operations including translating the gate operations into control signals for controlling the quantum elements of the quantum register and, optionally, for readout of the quantum elements to obtain hardware measurement data.

The quantum register may comprise at least n qubits. The unitary representation of the inverse transform quantum circuit $\hat{\mathcal{U}}_{\text{iQChT}}$ may be given by

$$\hat{\mathcal{U}}_{\text{iQChT}}(n) = \sum_{j=0}^{N-1} |j\rangle \langle \tau(x_j^{\text{Ch}})| \qquad (7)$$

wherein $N$ represents the number of basis states, $|j\rangle$ represents a Chebyshev basis state with index $j$, and $\langle \tau(x_j^{\text{Ch}})|$ represents a computational basis state with index $j$. Typically, $N = 2n$.

In an embodiment, the unitary representation of the inverse transform quantum circuit is equivalent to the Hermitian conjugate of the unitary representation of the transform quantum circuit as described above. That is, the defined sub-circuits are executed in reverse order, rotation angles and (relative) phase angles are multiplied by minus 1, and any unitary operator is replaced by its Hermitian conjugate.

In principle, the information content of an $n$-qubit register (the quantum register) can be described by $N = 2^n$ classical complex numbers. A 'quantum circuit' is a set of instructions sent by a classical computer to a quantum computer to execute certain 'gate operations', which in practice involve a sequence of operations on the quantum system such as microwave or optical pulses. As these gate operations can be described by a unitary matrix acting on the state vector of the quantum register, these gate operations are sometimes referred to as unitary operators or, in short, 'unitaries'.

In general, compressing $2^n$-dimensional data into an $n$-qubit register is beneficial due to exponential memory savings. However, several problems arise. First, creating an exponentially compressed state from a vector of constants is a serious problem, that requires sophisticated techniques like quantum random access memory (QRAM) and may require exponentially many gate operations for preparing a general state, resulting in an exponential scaling of the algorithmic runtime.

Current quantum devices are prone to noise and are not suited for large depth quantum circuits. However, the Hilbert space of these devices increases exponentially with the number of qubits, providing advantage over classical methods for certain problems. Quantum processors with about ~100 qubits may offer computational power inaccessible to classical computers. This corresponds to Noisy Intermediate Scale Quantum (NISQ) processors, that are special purpose devices that need to be co-designed with a problem in mind.

In a further aspect, embodiments in this disclosure relate to a method for solving a computational problem using a hybrid quantum computer system, wherein the method comprises receiving or determining a problem description describing the computational problem. The method may further comprise receiving or determining one or more first quantum circuits, based on the problem description, whose application results in the at least n qubits in the quantum register obtaining a first state represented by a computational basis state, receiving or determining a transform quantum circuit configured to map a computational basis state to a Chebyshev basis state, and executing, by the quantum register, the transform quantum circuit to the quantum register; or, receiving or determining one or more second quantum circuits, based on the problem description, whose application results in the at least n qubits in the quantum register obtaining a second state represented by a Chebyshev basis state, receiving or determining an inverse transform quantum circuit configured to map a Chebyshev basis state to a computational basis state, and executing, by the quantum register, the inverse transform quantum circuit to the quantum register. The method may further comprise receiving or determining one or more additional quantum circuits, based on the problem description, and executing, by the quantum register, the one or more additional quantum circuits on the quantum register. The method further comprises receiving measurement data representative of the state of the quantum register; and determining a solution to the computational problem based on the measurement data.

In an embodiment, applying one or more quantum circuits to the quantum register comprises translating each of the one or more quantum circuits into a sequence of signals (e.g., pulses, typically electric or electromagnetic pulses such as voltage pulses, optical pulses, or microwave pulses) and using the sequence of signals to operate the qubits in the quantum register of the quantum processor.

In an embodiment, receiving hardware measurement data comprises applying a read-out signal to qubits of the quantum processor and, in response to the read-out signal, measuring quantum hardware measurement data.

In general, the embodiments described herein can be implemented as sequences of operations that can be executed on, e.g., a neutral atom quantum computer, either in digital mode of operation, in analog mode, or in digital-analog mode. In particular, a hybrid quantum computer as described herein may include one or more of: a gate-based qubit device, a digital/analog quantum device, a neutral-atom-based quantum device, an optical qubit device and/or a gaussian boson sampling device.

In an aspect, the disclosure relates to a hybrid quantum computer system comprising a classical computer system and a quantum register. The quantum register may have at least $n$ qubits, with generally $n > 1$.

In an embodiment, the hybrid quantum computer system is configured for receiving or determining, by the classical computer system, one or more quantum circuits comprising gate operations on quantum elements of the quantum register; executing, by the classical computer system, the gate operations of the quantum circuit, the execution of the gate operations including translating the gate operations into control signals for controlling the quantum elements of the quantum register and for readout of the quantum elements to obtain hardware measurement data; and determining, by the classical computer system, information associated with a solution to the computational problem based on the hardware measurement data.

The one or more quantum circuits may include a Chebyshev feature map comprising gate operations for encoding one or more input features $x$, for example one or more data points or function variables, associated with the computational problem in the Hilbert space of the quantum elements of the quantum register, the gate operations being configured to encode the one or more classical input features $x$ in amplitudes of a set of orthogonal basis states of the quantum register, wherein the amplitudes are based on one or more Chebyshev polynomials of order $k, T_k(x), k = 0, ..., N-1$ wherein $N$ is a number of available basis states of the quantum register; and, optionally, a further quantum circuit, for example a variational quantum circuit, comprising gate operations determined by the computational problem.

In an embodiment, the hybrid quantum computer system is configured for: preparing the quantum register in a first state representing a computational basis state and receiving or determining a transform quantum circuit comprising gate operations on quantum elements of the quantum register, the transform quantum circuit comprising gate operations configured to map a computational basis state to a Chebyshev basis state; and/or preparing the quantum register in a second state representing a Chebyshev basis state and receiving or determining an inverse transform quantum circuit comprising gate operations on quantum elements of the quantum register, the inverse transform quantum circuit comprising gate operations configured to map a Chebyshev basis state to a computational basis state. The hybrid quantum computer system is further configured for executing the gate operations of the transform quantum circuit, the execution of the gate operations including translating the gate operations into control signals for controlling the quantum elements of the quantum register and, optionally, for readout of the quantum elements to obtain hardware measurement data.

In general, the hybrid quantum computer system may be configured to execute any of the method steps described above.

One aspect of this disclosure relates to a classical computer system or hybrid quantum computer system comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a classical computer system or hybrid quantum computer system, being configured for executing any of the methods described herein.

One aspect of this disclosure relates to a non-transitory computer-readable storage medium storing at least one software code portion, the software code portion, when executed or processed by a computer, configures the computer or hybrid computing system to perform any of the methods described herein.

As will be appreciated by one skilled in the art, aspects of the present invention may be embodied as a system, method or computer program product. Accordingly, aspects of the present embodiments may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present embodiments may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present embodiments may be written in any combination of one or more programming languages, including a functional or an object oriented programming language such as Java, Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present embodiments are described below with reference to flowchart illustrations and/or block diagrams of methods, apparatus (systems), and computer program products according to embodiments of the embodiments. It will be understood that each block of the flowchart illustrations and/or block diagrams, and combinations of blocks in the flowchart illustrations and/or block diagrams, can be implemented by computer program instructions.

These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present embodiments. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments will be further illustrated with reference to the attached drawings, which schematically will show embodiments according to the invention. It will be understood that the invention is not in any way restricted to these specific embodiments. Identical reference signs refer to identical, or at least similar elements.

Brief description of the drawings

Fig. 1A and 1B illustrate a scheme of training a quantum model for approximating a certain target function, and Fig. 1C and 1D are graphs comparing Fourier and Chebyshev approximations of a function;

Fig. 2A shows a visualization for a mapping of bitstrings in different spaces and Fig. 2B shows the squared overlap between two Chebyshev states;

**Fig. 3** is a flowchart of a method according to an embodiment;

Fig. 4A-C schematically show quantum circuits for an amplitude Chebyshev feature map, a Fourier feature map, and a Chebyshev-grid-based spectral feature map, respectively;

**Fig. 5A** and **5B** schematically show quantum circuits for a quantum Chebyshev transform and an inverse quantum Chebyshev transform according to two embodiments, respectively;

**Fig. 6A** and **5B** schematically show quantum circuits for a quantum Chebyshev transform and an inverse quantum Chebyshev transform according to two embodiments, respectively;

**Fig. 7A** and **7B** schematically show quantum circuits for a quantum Fourier transform and an inverse quantum Fourier transform, respectively;

Fig. 8A-C schematically show differentiated feature maps according to embodiments;

**Fig. 9A** and **9B** schematically show, respectively, DQGM training and sampling process according to embodiments;

**Fig. 10A** and **10B** show numerical results of a Chebyshev feature map used for DQGM according to an embodiment;

Fig. 11A-C show numerical results of a comparison between a Chebyshev feature map according to an embodiment and a Fourier feature map;

Fig. 12A-E schematically depict hardware-level schematics illustrating the application of logical operations to qubits using a quantum circuit;

**Fig. 13A** and **13B** depict systems describing a Digital-Analog implementation of a quantum algorithm and a quantum feature map, respectively; **Fig. 13C** illustrates pulses corresponding to the quantum feature map;

**Fig. 14A** and **14B** present quantum circuits based on a Digital-Analog implementation of quantum circuits;

**Fig. 15A** and **15B** present quantum circuits based on a Digital-Analog implementation of quantum circuits;

**Fig. 16** presents a workflow for generalized circuit differentiation for use in an embodiment; and

**Fig. 17A** and **17B** are block diagrams illustrating, respectively, an exemplary hybrid data processing system and an exemplary classical data processing system that may be used for executing methods and software products described in this disclosure.

## Detailed description

Quantum computing is moving from theory to practice. Currently, researchers are actively seeking quantum advantage, and various algorithms motivate this goal. Among these algorithms are Shor's order-finding, linear system solvers (HHL), Monte-Carlo pricing, and ground state preparation for chemistry and materials. All aforementioned protocols rely on subroutines that involve the quantum Fourier transform (QFT) and quantum phase estimation.

In these protocols, the quantum Fourier transform is crucial for the selection of an appropriate basis in which quantum information is processed. From an intuitive perspective, these protocols can be envisioned as operating in the phase (reciprocal) space and subsequently transformed into the computational (real) space to enable efficient readout. An analogous situation arises in condensed matter theory, where describing lattice systems in a suitable k-space basis can yield significant computational advantages and enable scalable modelling, circumventing the need for a large computational mesh. Similar considerations apply when constructing quantum models and algorithms.

Quantum machine learning (QML) is a nascent field at the interface of artificial intelligence and quantum information processing. It focuses on manipulating quantum data, either embedded from classical datasets or generated in quantum experiments. Inspired by the success of classical machine learning in tasks like image recognition and language processing, quantum machine learning aims to build quantum models that efficiently solve these problems. In simple terms, each quantum machine learning model is a quasi-probability distribution created by a quantum circuit, optionally followed by measurement post-processing. The goal is to prepare expressive and trainable quantum models using high-dimensional Hilbert spaces. However, this is challenging because high expressivity can lead to poor trainability (barren plateaus) and difficulties with generalization. Robust approaches to handle this are currently under development. They include embedding symmetries, limiting entanglement, crafting cost functions, and including differential constraints for physics-informed learning. The crucial point for building a high-performing quantum model is choosing an appropriate basis, coming from a selected quantum feature map.

Unlike quantum computing protocols that aim to achieve speed-up in terms of runtime and gate-count scaling, quantum machine learning goes beyond operational advantages, and offers conceptually new benefits. While quantum-enabled processing bears its own fundamental importance, particular advantages of quantum machine learning can come from improved learning and sampling. The learning advantage originates from generalization on fewer data points. This has been achieved, for instance, in convolutional networks applied to magnetic phase recognition and entanglement detection.

The sampling advantage comes from the inherently different procedure of generating a sample from quantum distributions as compared to classical sampling. While classical sampling requires integrating and inverting probability distributions (with complexity increasing for correlated stochastic variables), quantum devices can be sampled directly via projective measurements in the computational basis. This underpins the successful demonstration of quantum supremacy based on random circuits, recently demonstrated experimentally with 70-qubit random circuits. While to-date, a sampling advantage has not (yet) been demonstrated for relevant problems, this approach holds promise for generative modelling tasks. The crucial point for efficient quantum generative modelling is an ability to transform a quasi-probability distribution for a learning-favourable basis into the computational basis with fast and easy sampling.

The present disclosure describes distinct tools that enable quantum model building based on the Chebyshev basis. Chebyshev polynomials enable optimal function approximation with respect to $L_\infty$-norm (i.e.,

$$\sup_{x \in [-1,1]} |f(x) - f_{Ch}(x)|$$

, where $f(x)$ is the fitted function and $f_{Ch}(x)$ is the Chebyshev approximation). In a sense, a Chebyshev approximation minimizes the maximum error, so that the result is never 'very wrong'. The Chebyshev basis often leads to practical advantages over the Fourier basis, which is suitable for harmonic models and periodic functions, but performs poorly for polynomial decomposition.

The present disclosure describes an orthonormal Chebyshev map as a quantum circuit (formally, an isometry) parameterized by a (generally continuous) variable $x$, which creates quantum basis states with amplitudes corresponding to Chebyshev polynomials of $x$. In some embodiments, $x$ is a point on a so-called Chebyshev grid. This facilitates quantum model building in the Chebyshev space with polynomials of exponentially large degree, and enables (analytic) model differentiation. Additionally, a quantum Chebyshev transform (QChT) circuit is described that maps information encoded in the Chebyshev space to the computational basis, enabling sampling advantage.

When studying problems that can be described with mathematical equations, it can be very useful to describe a function in a function space, which may be considered an infinite-dimensional vector space. Several bases may be chosen to describe a function in such a function space, and for some problems, a certain basis may be more suitable than a different basis. A mathematical transforms can transform between different bases.

A well-known example is the Fourier transform (both in its discrete and continuous forms), which is particularly useful for periodic functions and finds many uses in, e.g., signal processing. The discrete Fourier transform is based on a set of basis functions $f_k(x) = e^{i k x}$, an inner product $f \cdot g = \frac{1}{2\pi} \int_{-\pi}^{\pi} f(x)\, g^*(x)\, \mathrm{d}x$, where $g^*(x)$ denotes the complex conjugate of $g(x)$, and a norm $\|f\| = \sqrt{f \cdot f}$. (Other authors may use different, mathematically equivalent conventions for the choice of basis functions, inner product, and norm). It can be shown that this defines a complete orthonormal basis.

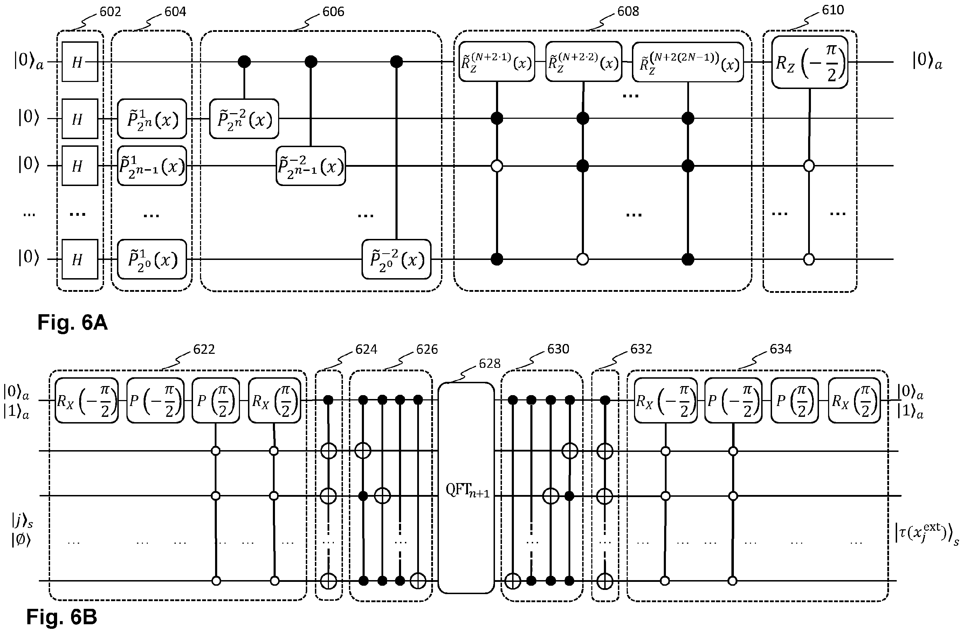

A quantum version of the Fourier transform has been implemented as the so-called Quantum Fourier Transform (QFT), as described in more detail below with reference to **Fig. 6.**

Klappenecker et al., 'Discrete Cosine Transforms on Quantum Computers', IEEE R8-EURASIP Symposium on Image and Signal Processing and Analysis (Pula, Croatia; 2001) pages 464-468, describe quantum circuits for the discrete cosine transform (DCT) and discrete sine transform (DST), which are closely related to the discrete Fourier transform. The derivation of these quantum circuits is specific to the DCT and DST, and cannot be generalised to different basis functions in a straightforward manner.

A different complete set of orthonormal basis functions on the domain [-1,1] is provided by Chebyshev polynomials

$$T_k(x) = \cos(k \arccos x) = \frac{1}{2}\left( \left(x + \sqrt{x^2 - 1}\right)^k + \left(x - \sqrt{x^2 - 1}\right)^k \right), \qquad (8)$$

with inner product $f \cdot g = \frac{2}{\pi} \int_{-1}^{1} \frac{f(x)g(x)}{\sqrt{1-x^2}}\, \mathrm{d}x$ and norm $\|f\| = \sqrt{f \cdot f}$. These polynominals are sometimes referred to as Chebyshev polynomials of the first kind. They are alternatively defined as $T_k(\cos \theta) = \cos(k\theta)$, with $\theta \in [0, \pi]$.

However, there is currently no known implementation of a Chebyshev transform for a data point encoded in a quantum register, i.e., a Quantum Chebyshev Transform (QCT).

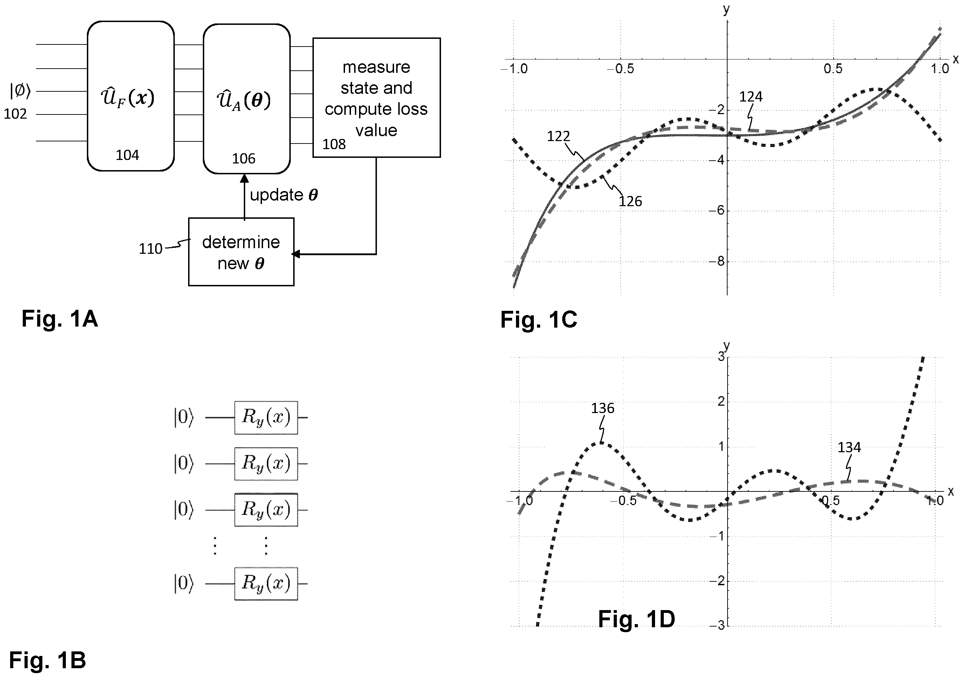

**Fig. 1A** and **1B** illustrate a known scheme of training a quantum model for approximating a certain target function, e.g. a solution to differential equation. As shown in the figure, the quantum model may be represented by a quantum circuit including a feature map $\hat{U}_F(x)$ **104** for encoding one or more classical input features into the Hilbert space of a quantum register **102** and a variational Ansatz $\hat{U}_A(\theta)$, **106**, parameterized by parameters $\theta$, may be variationally optimized. The quantum circuits may include sequences (layers) of quantum gates which may be executed on the quantum register. Here, the only dependence on the input value is in the feature map; the variational Ansatz is independent of the input value x.

The training of the quantum model may be based on an optimization scheme, wherein after initialisation of the variational parameters, the gate operations of the quantum circuit may be executed, and the state of the quantum register may be measured using a cost function. Based on the measured state a loss value may be computed based on a loss function (block **108**). If the loss value does not meet one or more optimization conditions, the variational parameters may be updated by an optimizer **110.** Thereafter, the quantum circuit may be executed using the updated variational parameters and the state of the quantum registered may be measured and a new loss value may be computed. These steps may be repeated until the one or more optimization conditions are met. The state of the optimized quantum circuit may represent an optimized approximation of a desired target function.

The logic gates of the quantum circuits used in the quantum machine learning scheme are parameterized by a set of trainable parameters $\theta$ which are subsequently trained by a classical optimizer to maximize or minimize a loss function. These parametrized quantum circuits can be used as quantum machine learning models, applied to applications such as learning or generating an unknown distribution from a set of input features or solving differential equations. The embodiments described herein apply to such quantum models in general, including specific architecture choices that are realised as quantum neural networks and quantum kernels.

The quantum circuits used for the quantum models include different types of circuits. A quantum feature map circuit **104,** i.e., a unitary operation $\hat{U}_F(x)$, is used to encode one ore more input values $x$ into the Hilbert space of the quantum register. These inputs could be raw data, for example pixels in a classification problem, or the variables of the problem, for example the Cartesian coordinates of learning a 3-D distribution $g(x, y, z)$. A variational Ansatz, represented by a unitary operation $\hat{U}_A(\theta)$, comprises trainable parameters $\theta$ to be optimized in a variational scheme. A cost operation $\hat{C}$ is applied to the final quantum state, producing a set of classical outputs representing the prediction of the quantum model.

**Fig. 1B** depicts an example of a simple (known) quantum feature map wherein an input value $x$ is encoded based on a single rotation gate operation $R_y$. This quantum feature map may be defined by the tensor product of $R_y$ rotations:

$$\hat{U}_F(x) = e^{\sum_{j=1}^n -\mathrm{i}\,\hat{Y}^j x/2}$$ . Here, the input $x$ is rescaled by a factor of 1/2 for simplicity, such that the feature map can be implemented in a quantum circuit by a set of parallel gates $R_y(x)$ acting across each qubit as shown in the figure.

However, the goodness of the approximation of the desired target function depends (among other things) on the feature map that is used to encode the input. This is shown in **Fig. 1C** and **1D,** which are graphs comparing Fourier and Chebyshev approximations of a function. In particular, **Fig. 1C** displays a $6^{th}$-degree polynomial function **122** (solid line), the $4^{th}$-degree Chebyshev approximation **124** (dashed line), and the $4^{th}$-degree (real) Fourier approximation **126** (dotted line), over the interval $-1 \leq x \leq 1$. The polynomial is defined as $f(x) = -x^6 + 2\,x^5 - x^4 + 3\,x^3 + x^2 - 3$. The Chebyshev approximation is given by $f_{Ch}(x) = -3.1875\,T_0(x) + 3.5\,T_1(x) - 0.46875\,T_2(x) + 1.375\,T_3(x)$. The Fourier approximation is given by $f_F(x) = -3.0095 + 1.0105\,\sin(x) + 0.1624\,\cos(x) - 1.1729\,\sin(2x)$.

**Fig. 1D** shows the difference between the target polynomial and the Chebyshev approximation **134** (dashed line) and Fourier approximation **136** (dotted line), respectively. In this example, the Fourier approximation has a very poor performance especially close to the boundaries. This is because the Fourier approximation uses only periodic basis functions, and is therefore ill-equipped to approximate non-periodic functions (especially when only a limited number of terms is used). In this example, the maximum difference ($L_\infty$-norm) is 0.427 for the Chebyshev approximation, and -5.828 for the Fourier approximation.

In general, a quantum model is defined as a circuit-based function that depends on an embedded (explicit) or implicit variable $x$ (possibly multidimensional), and parameters $\theta$ for an adaptive quantum circuit $\hat{V}_\theta$. Depending on how the variable is treated, the quantum model may be categorized as an explicit or implicit model. Explicit models are used in, e.g., classification, regression, and scientific machine learning. Implicit models, with the prominent example of the quantum circuit Born machine (QCBM), are routinely used in generative modelling. Below, both types of quantum models are defined. Additionally, a way to unify the two concepts within the quantum Chebyshev modelling framework is described.

Explicit quantum models rely on a quantum feature map (embedding) as described above, i.e., a quantum circuit $\hat{U}_\varphi(x)$ parametrized by $x$. Here, $x$ denotes a vector of continuous or discrete variables. In the following, for the sake of simplicity, a single variable case $x$ is discussed, but the generalisation towards multivariate implementations is straightforward. Quantum feature maps often take the form of re-uploaded single-qubit rotations. This variable-dependent part of the circuit supplies features to the model, which are then adjusted by the adaptive circuit parts $\hat{V}_\theta$. In general, the explicit quantum model reads:

$$f_\theta(x) = \mathrm{tr}\{\hat{U}_{\theta,x}^\dagger\,\hat{\rho}_0\,\hat{U}_{\theta,x}\,\hat{C}\}, \qquad\qquad (9)$$

where $\hat{\rho}_0$ is an initial state, typically chosen as a density operator corresponding to the zero computational basis state, $\hat{\rho}_0 :=$ $|\emptyset\rangle\langle\emptyset|$, where $|\emptyset\rangle = |0\rangle^{\otimes n}$ for $n$ qubits. This is transformed by $\hat{U}_{\theta,x}$ as an interleaved combination of feature maps and adaptive circuits. The scalar-valued model is then obtained by measuring an observable $\hat{C}$, a predefined cost operator for the circuit read-out. The optimal choice of cost operators in QML remains an open question ; typically a simple Z-basis measurement for selected qubits is chosen, or a projector on a certain computational state. It is noted that quantum models can involve mid-circuit measurements and trace-out operations, such that adaptive completely positive trace-preserving (CPTP) maps $\varepsilon_{\theta,x}(\hat{\rho}_0)$ are effectively implemented.

Implicit quantum models rely on treating a variable $x$ as a measurement result, corresponding to the projection (collapse) on a (computational) basis state $|x\rangle$. In this case, the model is encoded as a probability distribution

$$p_{\boldsymbol{\theta}}(x) = \mathrm{tr}\{\hat{V}_{\boldsymbol{\theta}}^{\dagger}\,\hat{\rho}_0\,\hat{V}_{\boldsymbol{\theta}}|x\rangle\langle x|\}$$

, following Born's rule. The embedding disappears, and the overlap with state $\hat{\rho}_0$ transformed by $\hat{V}_{\theta}$ solely defines the probability. The distinct part of this model is that each measurement result from the circuit leads to drawing a sample from parameterized probability distribution, $x \sim p_{\theta}(x)$. This lays the ground for generative modelling tasks with QCBM-type generators. However, the main difficulty is in learning the ground-truth distribution $p_{\text{truth}}$ such that it is matched by $p_{\theta*}(x)$ at some parameters $\theta*$. Additionally, the overlap models can be exploited implicitly using $g_{\theta}(x) = \langle x|\hat{V}_{\theta}|\emptyset\rangle$, which uses a SWAP test for the real and imaginary parts of the overlap, unlike the absolute value squared case for the probability.

In general, there is a connection between explicit and implicit models. Specifically, for models built on circuits that factorize into a sequential feature map and adjustable layers, $\hat{U}_{\boldsymbol{\theta},x} = \hat{V}\,\hat{U}_f(x)$, and a projector-type cost operator

$$\hat{C} = |\emptyset\rangle\langle\emptyset| =: \hat{C}_0,$$

an explicitly generated $x$-measurement can be used. This requires that the feature map is such that the basis state is embedded as $|x\rangle = \hat{U}_f(x)\,|\emptyset\rangle$ for $x \in \mathbb{Z}_{N-1}$. Then, the implicit and explicit models match as:

$$p_{\boldsymbol{\theta}}(x) = \mathrm{tr}\{\hat{V}_{\boldsymbol{\theta}}^{\dagger}\,\hat{\rho}_0\,\hat{V}_{\boldsymbol{\theta}}|x\rangle\langle x|\} = \mathrm{tr}\{\hat{U}_f^{\dagger}(x)\,\hat{V}_{\boldsymbol{\theta}}^{\dagger}\,\hat{\rho}_0\,\hat{V}_{\boldsymbol{\theta}}\,\hat{U}_f(x)\,\hat{C}_0\} \qquad (10)$$

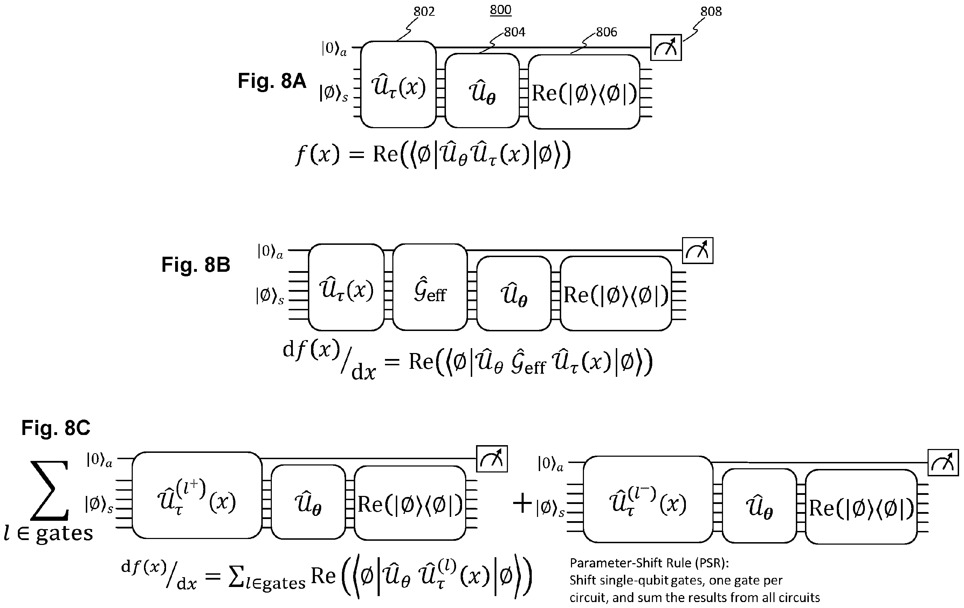

The model above can be sampled (left hand side) or accessed as a scalar valued function at specified variable $x$, after averaging. Importantly, the explicit form of $p_{\theta}(x)$ can be differentiated with respect to x. This enables including differential constraints (used in, e.g., physics-informed machine learning) and studying sensitivities (also known as Greeks in finances). Understanding how to build models in feature (latent) spaces and mapping them to sampleable distributions is key to successful generative modelling. Differentiation is discussed in more detail below with reference to **Fig. 8**.

The present disclosure provides models based on feature maps that can enable sampling in the computational basis. The computational basis corresponds to the set of orthonormal states $\left\{|x_j\rangle\right\}_{j=0}^{N-1}$ (with $N = 2^n$ when using $n$ qubits) such that overlaps of the basis states equate to the Kronecker delta function, $\langle x_j|x_{j'}\rangle = \delta_{j,j'}$. These states $|x_j\rangle$ can be generated by applying Pauli X operators to the computational zero; this is sometimes referred as a digital feature map. However, building models in this computational basis space is difficult, as it assumes adjusting amplitudes (probabilities) for the entire domain. A different approach can be used if the model is built based on another orthonormal set of states, and an appropriate mapping between the two bases is developed. This has been shown for the Fourier feature map and Fourier transform in PCT/EP2023/052998, which is hereby incorporated by reference; in the present disclosure, it is shown how this can be achieved via the (orthonormal) Chebyshev map and the associated quantum Chebyshev transform.

Specifically, a quantum circuit is disclosed that prepares a quantum state $|\tau(x)\rangle$ with amplitudes given by Chebyshev polynomials $T_k(x) = \cos(k \arccos(x))$ of the first kind and degree $k$. The target state in the Chebyshev basis is of the form

$$|\tau(x)\rangle = \frac{1}{\sqrt{N}}T_0(x)|\emptyset\rangle + \frac{\sqrt{2}}{\sqrt{N}}\sum_{k=1}^{N-1}T_k(x)|k\rangle \qquad (11)$$

where $T_k(x)$ are the Chebyshev polynomials of the first kind of degree $k$. The computational zero state has a distinct amplitude and is given by $T_0(x) = 1$. Given the properties of the polynomials $T_k(x)$, the states in eq. (11) are orthonormal at the Chebyshev nodes

$$x_j^{\text{Ch}} = -\cos\left(\left(j + \tfrac{1}{2}\right)/N\,\pi\right), \tag{12}$$

also known as the root grid points; the same is true for the points on the extrema grid. Namely, the set of Chebyshev states $\left\{\left|\tau\left(x_j^{\text{Ch}}\right)\right\rangle\right\}_{j=0}^{N-1}$ are such that $\left\langle\tau\left(x_j^{\text{Ch}}\right)\middle|\tau\left(x_{j'}^{\text{Ch}}\right)\right\rangle = \delta_{j,j'}$. The orthonormality of this set of states follows from the orthogonality conditions of the Chebyshev polynomials,

$$\sum_{j=0}^{N-1} T_k\left(x_j^{\text{Ch}}\right) T_l\left(x_j^{\text{Ch}}\right) = \begin{cases} 0, & k \neq l \\ 2, & k = l = 0 \\ 1, & k = l \neq 0 \end{cases} \tag{13}$$

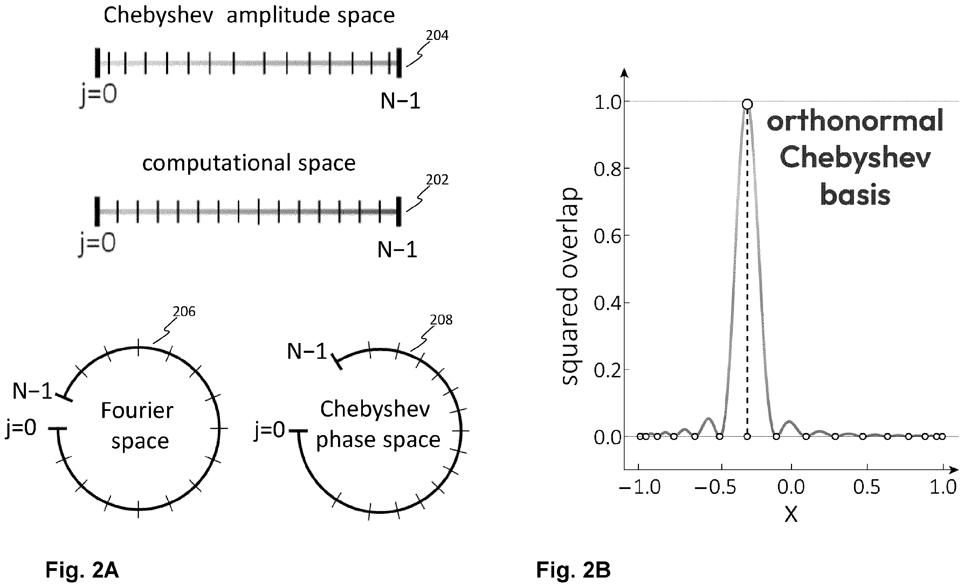

The Chebyshev nodes $x_j^{\text{Ch}} \in (-1, 1)$ form a non-equidistant grid, unlike the standard computational basis and Fourier basis associated with equidistant "ruler"-type and "clock"-type grids, as shown in **Fig. 2A.**

**Fig. 2A** shows a visualization for a mapping of bitstrings in different spaces; in particular the computational basis **202** (centre), which is labelled by integers $j \in [0, N - 1]$, with $N = 2^4 = 16$, and the so-called (real) Chebyshev space **204** with non-equidistant nodes, given by $x_j^{\text{Ch}} = -\cos\left(\left(j + \tfrac{1}{2}\right)/N\,\pi\right)$ (top). For comparison, the Fourier space **206** with an equidistant grid of phases (sectors on a circular open-ended loop with $2\pi\,j/N$ arcs) is also shown (bottom).

It is noted that some earlier publications used the term "Chebyshev feature map" for a different kind of feature map. This earlier use refers to a phase-encoded feature map, rather than an amplitude-encoded one. This earlier phase-encoded Chebyshev-like feature map can be defined by:

$$\left\{\exp\left(i\,\frac{j}{N}\arccos x\right)\right\}_{j=0}^{N-1} = \left\{\cos\left(\frac{j}{N}\arccos x\right) + i\sin\left(\frac{j}{N}\arccos x\right)\right\}_{j=0}^{N-1} \tag{14}$$

The associated "Chebyshev phase space", as well as the "Chebyshev phase space" associated with the **208** is also shown. Like the Fourier space, this space is defined on the complex plane. By way of contrast, the 'real' Chebyshev space **204** may also be referred to as the Chebyshev amplitude space.

Unless explicitly stated otherwise, the term "Chebyshev feature map" in this disclosure refers to the amplitude-encoded Chebyshev feature map.

**Fig. 2B** shows the squared overlap between two Chebyshev states $|\tau(x')|\tau(x)\rangle|^2$, for $x' = x_7^{\text{Ch}}$ and $N = 2^4 = 16$, showing that the basis is orthonormal at the nodes (indicated with open circles): the overlap equals zero at all nodes with $j \neq 7$, and equals 1 for $j = 0$. Notably, the Chebyshev overlaps are real, unlike complex overlaps between Fourier states or the earlier phase-encoded Chebyshev-like feature maps, but lead to similar mid-point behaviour. The squared overlap can be derived analytically for one of the variables $x'$ set to one of the Chebyshev nodes, such that

$$|\langle\tau(x')|\tau(x)\rangle|^2 = \frac{\left(T_{N+1}(x')\,T_N(x) - T_N(x')\,T_{N+1}(x)\right)^2}{N^2(x' - x)^2}, \tag{15}$$

which can be derived from the Christofel-Darboux formula for Chebyshev polynomials.

It is noted that it is not necessary for all applications to use only points of a Chebyshev grid. If different x-values are used, the resulting feature map is not orthogonal, but may still be useful for function modelling.

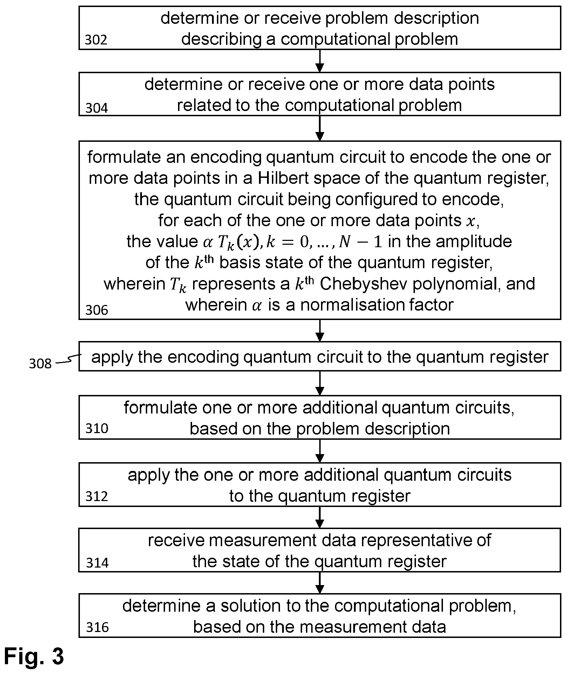

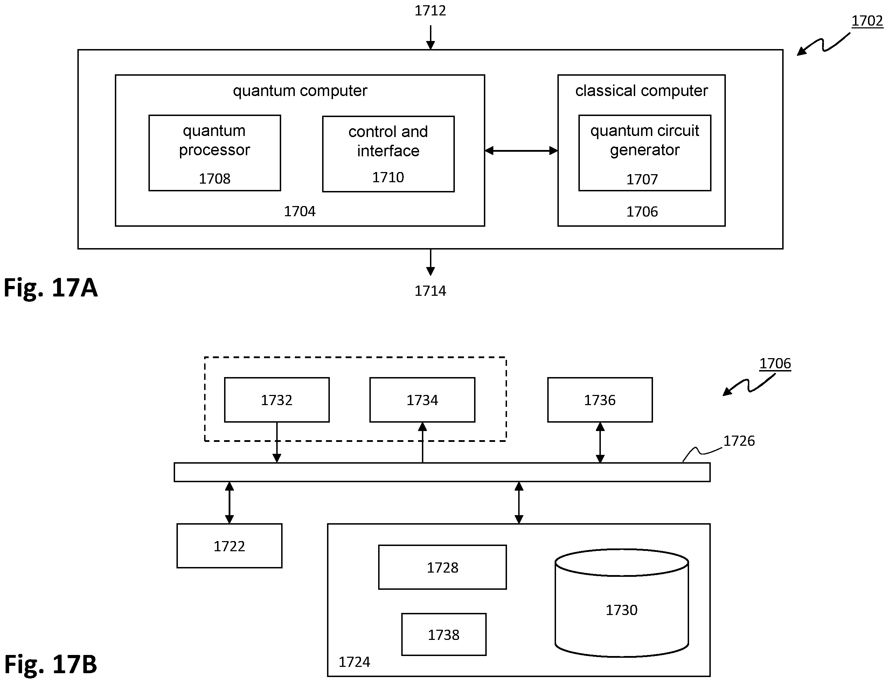

**Fig. 3** is a flow chart describing a method according to an embodiment. The method is typically executed by a hybrid quantum computer comprising a classical processor communicatively coupled to a classical memory, and a quantum processor comprising a quantum registry. The quantum register comprises at least $n$ qubits, with typically $n > 1$. This provides $N = 2^n$ basis states in the amplitude and/or phase of which information may be encoded, generally speaking. Typical currently available systems have a few dozen to a few hundred qubits. In some cases, only a subset of the available qubits is used to encode a data points. An example of a hybrid quantum computer is described in more detail below with reference to **Fig. 17A.**

Generally, the classical processor is configured to control the quantum processor. The steps as described below are typically performed by the classical processor, but comprise operating the quantum processor.

A first step **302** comprises determining or receiving a problem description describing a computational problem. The computational problem can be, for example, a differential equation problem, a regression problem such as a data regression problem (e.g., combinatorial optimisation), a generative modelling problem, et cetera.

A step **304** comprises determining or receiving one or more data points related to the computational problem. The data points can be, e.g., collocation points, input points associated with output points, et cetera. The data points $x$ may have been rescaled to be in the interval $x \in [-1,1]$. In some embodiments, the data points are chosen to correspond with points on the Chebyshev grid, i.e., $x \in \left\{ x_j^0, j = 0, ..., N-1 \right\}$ where $x_j^0 = \cos \dfrac{j+1/2}{N} \pi$, or $x \in \left\{ x_j^{\text{ext}}, j = 0, ..., N \right\}$ where $x_j^{\text{ext}} = \cos \dfrac{j}{N} \pi$.

A step **306** comprises receiving or determining a quantum circuit to encode the one or more data points in a Hilbert space associated with the quantum register of the quantum processor, the quantum circuit being configured to encode each of the one or more data points, such that the amplitude of the basis state with label $k$, $k = 0,1, ..., N$ of the quantum register equals a normalisation factor times a value of a Chebyshev polynomial of degree $k$. In other words, each data point $x$ is encoded with the value $\alpha\, T_k(x)$, $k = 0, ..., N-1$ in the amplitude of the $k^{\text{th}}$ basis state of the quantum register, wherein $T_k$ represents a $k^{\text{th}}$ Chebyshev polynomial, and wherein $\alpha$ is a normalisation factor. The Chebyshev polynomial can be a Chebyshev polynomial of the first kind or a Chebyshev polynomial of the second kind (commonly denoted as $U_k(x)$).

If a data point corresponds to a points on a Chebyshev grid, the normalisation factor $\alpha = 1$. In this case, the Chebyshev functions form an orthonormal basis, as discussed above with reference to **Fig. 2B.**

A step **308** comprises applying the formulated quantum circuit. This step typically comprises the classical processor configuring the quantum processor to execute the quantum circuit. Execution of the quantum circuit by the quantum processor transforms the qubits in the quantum register; in this case in accordance with the rules described above.

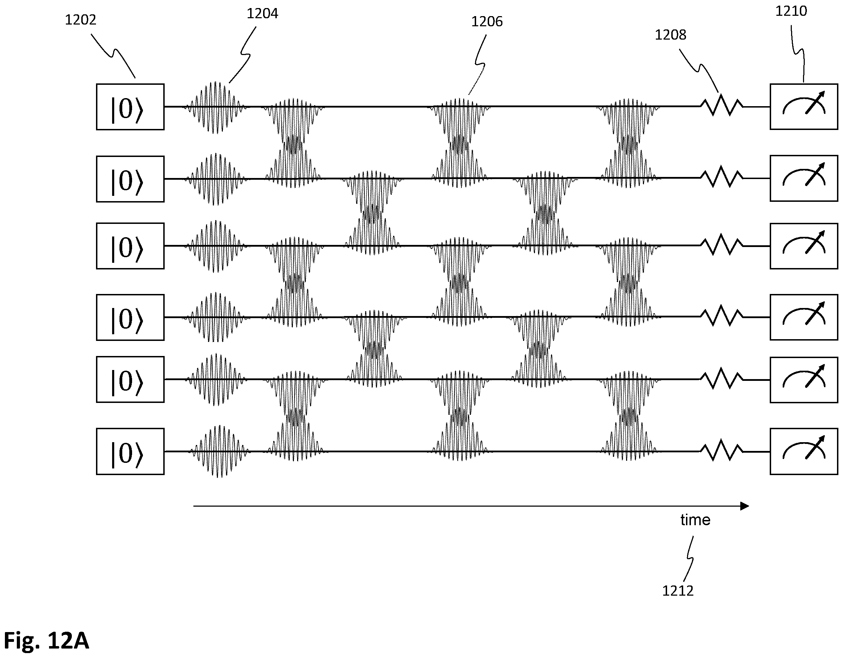

As used herein, a quantum circuit defines a sequence of one or more logical 'quantum gates' for which a hardware implementation is known. Such a hardware implementation typically comprises one or more pulses with a well-defined frequency, amplitude, and duration. Examples of hardware-level schematics of quantum circuits are provided below in, e.g., Figs. 12A-E.

The formulated quantum circuit may comprise an initialisation part. Alternatively an initialisation circuit may be applied prior to application of the encoding quantum circuit.

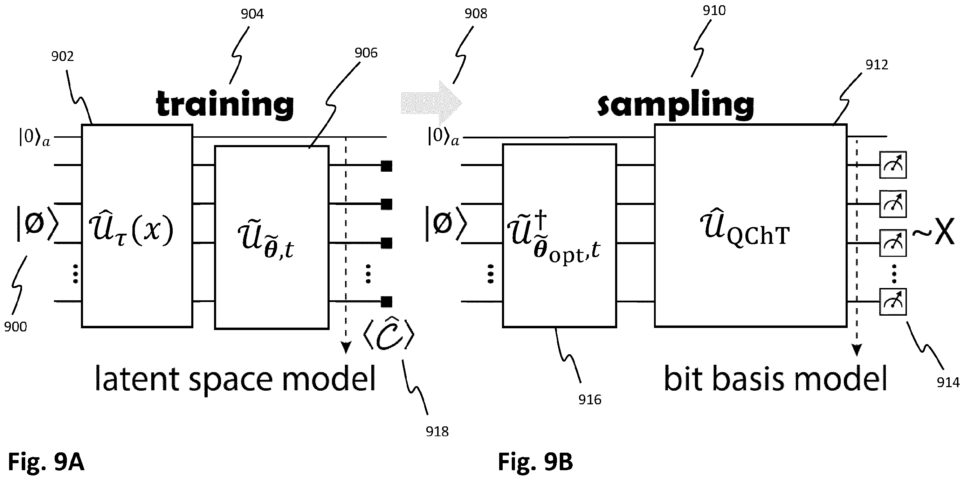

A step **310** comprises receiving or determining one or more additional quantum circuits. These additional quantum circuits depend on the problem being solved. They may include, e.g., a variational circuit with optimisable parameters. Some examples of additional circuits for various classes of problems are described with reference to **Figs. 1A** and 9A-B. Depending on the computational problem being solved, some of the one or more additional circuits may be applied prior to application of the encoding quantum circuit.

A step **312** comprises applying the one or more additional quantum circuits to the quantum register.

A step **314** comprises receiving measurement data representative of the state of the quantum register. The measurement data may be hardware measurement data representing measurements of an output state of the quantum register. This step may comprise the classical processor configuring the quantum processor to perform a measurement on at least part of the n qubits in the quantum register.

A step **316** comprises determining a solution to the computational problem, based on the measurement data and, typically, the problem description.

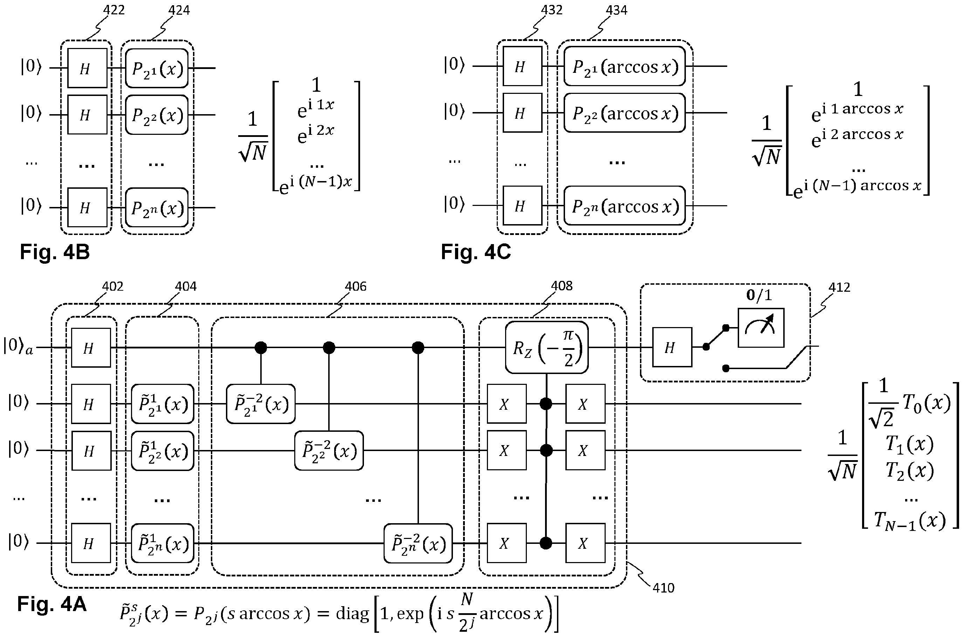

The construction of the circuit shown in **Fig. 4A,** which encodes a data point $x$ with a Chebyshev feature map, is based on the observation that the Chebyshev polynomials are defined as $T_k(x) = \cos(k \arccos(x))$ and are therefore of the form of cosine; in particular, $T_k\left(x_j^{\text{Ch}}\right) = \cos\left(k\,\pi\left(1 - \dfrac{j+1/2}{N}\right)\right)$. The cosine can be recovered from $\cos(x) = \dfrac{1}{2}\left(e^{i\,x} + e^{-i\,x}\right)$, which can be implemented with the use of an ancillary qubit.

Thus, the Chebyshev polynomials can be prepared using a combination of exponents for some scaled variable $x$, where each amplitude is embedded via a phase feature map [ref DQGM]. The positive and negative phase can be combined using a so-called Linear Combination of Unitaries (LCU) approach, as described in Childs et al., 'Quantum algorithm for systems of linear equations with exponentially improved dependence on precision', SIAM Journal on Computing 46 (2017) pages 1920-1950.

In this approach, maps are conditioned on the state of the (top) ancilla qubit, and effectively interfered, choosing the ancilla collapsed to 0 outcome.

In a first step **402,** a layer of Hadamard gates is applied to all qubits (including the ancilla) to prepare a superposition of all basis states. In a step **404,** a single-qubit scaled phase shift gate $\tilde{P}_{2^j}^1(x)$ is applied to the encoding qubits, which is defined as

$$\tilde{P}_{2^j}^s(x) = P_{2^j}(s \arccos x) = \mathrm{diag}\left[1, \exp\left(\mathrm{i}\, s\frac{N}{2^j}\arccos x\right)\right] \tag{16}$$

where $j$ is the qubit number. This is followed by a layer **406** of controlled single-qubit scaled phase feature maps $\tilde{P}_{2^j}^{-2}(x)$ that are conditioned on the ancilla. Conceptually, the first layer corresponds to exp(i $x$) and the second layer corresponds to exp(-i 2$x$). However, since exp(-i $x$) = exp(i $x$) exp(-i 2$x$), this results in equal-weight combinations of exponents exp(i $x$) + exp(-i $x$). Thus, the amplitudes for the basis functions are scaled, based on the variable $x$ such that $T_k(x)$ are recovered.

Finally, the weight of the constant ($T_0(x)$) term is adjusted. The depicted example uses a round of Grover's iterate circuit **408,** rotating the state around $|\varnothing\rangle$ for a fixed angle $-\pi/2$. As the measurement operation **412** on the ancilla (including the preceding Hadamard gate) commutes with rotation, the measurement can be postponed to the end of the circuit. This allows post-selection of the desired state also on systems where only all qubits can be read out simultaneously.

This way, the resulting quantum Chebyshev feature map creates a Chebyshev state via an x-parametrized isometry.

The layers **402-408** may together be referred to as the Chebyshev feature map **410,** as in practice the measurement on the ancilla may often be postponed, with one or more other circuits in between (see, e.g., **Fig. 8A** and **9A**). The Chebyshev feature map may be represented by a unitary operator $\hat{U}_\tau(x)$.

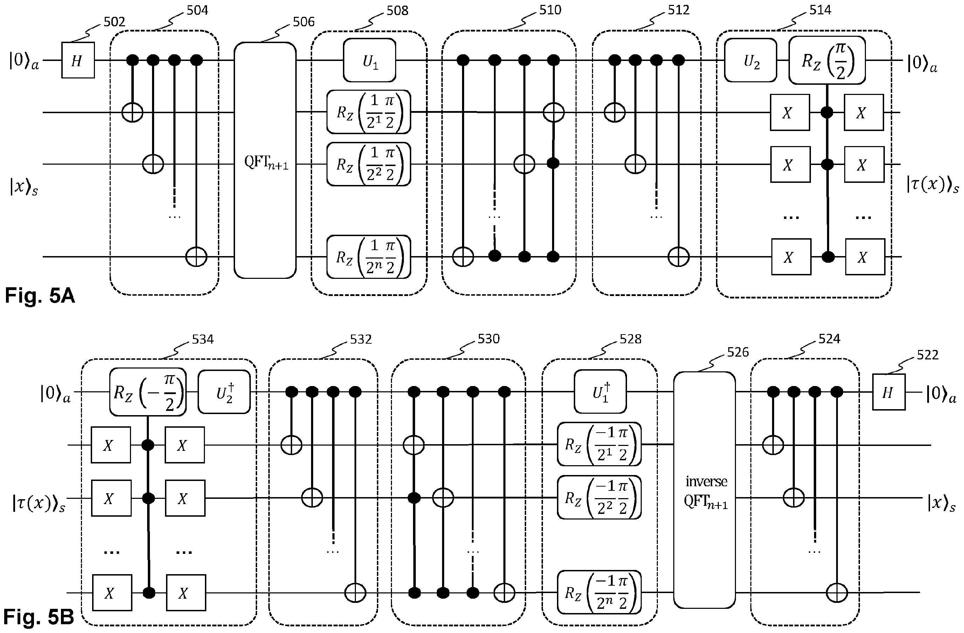

This results in a state such that at the set of the $N = 2^n$ Chebyshev nodes an orthonormal basis is formed. Therefore, there exists a bijection and corresponding transformation between this basis and any different orthonormal basis. **Fig. 5A** shows the Chebyshev transform which performs the transformation between the Chebyshev and computational bases.

**Fig. 4B** schematically shows a quantum circuits for a Fourier feature map (Fourier encoding or spectral encoding), for the sake of comparison. This circuit does not use an ancilla. The circuit comprises a layer of Hadamard gates **422** to create a superposition of all basis states, followed by a layer **424** of (unscaled) single-qubit phase feature maps

$$P_{2^j}(x) = \mathrm{diag}\left[1, \exp\left(\mathrm{i}\,\frac{N}{2^j}x\right)\right] \tag{17}$$

**Fig. 4C** schematically shows a quantum circuits for a phase-encoded Chebyshev-like feature map, for the sake of comparison. This circuit does not use an ancilla. The circuit comprises a layer of Hadamard gates **432** to create a superposition of all basis states, followed by a layer **434** of (scaled) single-qubit phase feature maps

$$\tilde{P}_{2^j}^1(x) = P_{2^j}(\arccos x) = \mathrm{diag}\left[1, \exp\left(\mathrm{i}\,\frac{N}{2^j}\arccos x\right)\right] \tag{18}$$

For the sake of clarity, it is noted that the feature maps referred to as Chebyshev encoding feature maps in previous disclosures by the present inventors are fundamentally different from the Chebyshev feature map described herein. For example, the previously described feature maps have, in general, a non-zero imaginary part, and are not orthonormal. This prevents their conversion to amplitude encoding (which is standard in quantum information processing), and building distributions for generative modelling in particular. By contrast, the currently disclosed Chebyshev feature map is orthonormal and real (i.e., the imaginary part is zero), and may therefore be considered an amplitude encoding.

**Fig. 5A** schematically shows an example of a Quantum Chebyshev transform circuit according to an embodiment. This circuit maps computational basis states $\{|j\rangle\}_{j=0}^{N-1}$ into Chebyshev states $\{|\tau(x_j^{\mathrm{Ch}})\rangle\}_{j=0}^{N-1}$. Similar to the Chebyshev amplitude encoding, this circuit uses an ancillary qubit. In the depicted example, an Hadamard gate is applied to the ancilla, followed by a CNOT-ladder controlled by the ancilla.

The transform involves a quantum Fourier transform (QFT) circuit (described below with reference to **Fig. 6A**) applied to $n + 1$ qubits ($n$ encoding qubits plus one ancilla), followed by phase-adjusting and permutation circuits. Here, single-qubit rotations of the form

$$U_1 = P\left(-\frac{\pi}{2}N\right) R_z\left(-\pi\frac{N-1}{2N}\right) \text{ and } U_2 = P\left(-\frac{\pi}{2}\right) R_y\left(-\frac{\pi}{2}\right) \tag{19}$$

are used with the single-qubit phase shift gate $P(\phi) = \text{diag}\{1, \exp(i\phi)\}$. The unitary operators $U_1$ and $U_2$ applied to the ancilla can be combined into a single-qubit gate $U_a = U_2 U_1$.

The quantum Chebyshev transform shown in **Fig. 5A** can be understood as a specific version of the (discrete) cosine transform. Considering the normalized output states in **Fig. 4A** evaluated at specific $x = \frac{N}{\pi}\arccos\left(x_j^{\text{Ch}}\right) = j + \frac{1}{2}$, with the integer $j \in [0, N-1]$, on the condition of ancilla bit measured in $|0\rangle$ state; in this case, each of them corresponds to the $(j+1)^{\text{th}}$ column of the type-II discrete cosine transform matrix, $DCT^{II}_N$, and they form a set of orthonormal basis states.

$$DCT^{II}_N := \frac{\sqrt{2}}{\sqrt{N}}\left(c_k \cos\left(\frac{\left(j+\frac{1}{2}\right)}{N} k\pi\right)\right)_{k,j=0,\dots,N-1}, \qquad c_k = \begin{cases} \frac{1}{\sqrt{2}}, & k = 0 \\ 1, & k \neq 0 \end{cases} \tag{20}$$

Therefore, the above-mentioned Chebyshev feature map circuit takes at least $N$ times to construct a full $DCT^{II}_N$ matrix. **Fig. 5A** shows an alternative approach similar to quantum Fourier transform (QFT) to obtain the quantum Chebyshev transform (QChT) equivalent to $DCT^{II}_N$.

The circuit coverts a complex-valued matrix into a purely real matrix through a series of unitary gates. The circuit **500** starts with a Hadamard gate **502** on the ancilla (being considered the most significant bit), followed by a sequence of controlled-NOT gates **504** applied on the other $n$ qubits to create a $(n+1)$-qubit entangled state. This is followed by a $(n+1)$ QFT circuit **506** applied to both the ancillary and encoding qubits. After the QFT, controlled-$R_z$ gates **508** are introduced to adjust the relative phase of the encoding qubits, and a unitary operator $U_1 = P\left(-\frac{\pi}{2}N\right) R_z\left(-\pi\frac{N-1}{2N}\right)$ is applied to the ancilla.

The resulting state (behind the $U_1$ gate) has purely real amplitude of $|0\rangle_a|\Phi\rangle$ and a purely imaginary amplitude of $|1\rangle_a|\Phi\rangle$ for any n-qubit intermediate state $|\Phi\rangle$. A permutation circuit **510** is used to reorder amplitudes of the conditioned states, i.e., $|1\rangle_a |\Phi\rangle \rightarrow |1\rangle_a |(\Phi + N - 1) \bmod N\rangle$, followed by a layer **512** of $n$-controlled-NOT gates to ensure that the amplitude of $|0\rangle_a|\Phi\rangle$ ($|1\rangle_a|\Phi\rangle$) returns to purely real (imaginary). This is followed by a layer **514** comprising a unitary operator $U_2 = P\left(-\frac{\pi}{2}\right) R_y\left(-\frac{\pi}{2}\right)$ applied to the ancilla, and then multi-controlled $R_X$ gates. Finally, on the condition of the input and output ancilla bits being respectively initialized with and measured in the 10) state (not shown), the quantum Chebyshev transform is obtained.

A representative example of the Chebyshev transform matrix for n = 2 is given by

$$M_{\text{QChT}}(2) = \frac{1}{\sqrt{2}}\begin{pmatrix} \cos\frac{\pi}{4} & \cos\frac{\pi}{4} & \cos\frac{\pi}{4} & \cos\frac{\pi}{4} \\ \cos\frac{1\pi}{8} & \cos\frac{3\pi}{8} & \cos\frac{5\pi}{8} & \cos\frac{7\pi}{8} \\ \cos\frac{2\pi}{8} & \cos\frac{6\pi}{8} & \cos\frac{10\pi}{8} & \cos\frac{14\pi}{8} \\ \cos\frac{3\pi}{4} & \cos\frac{9\pi}{8} & \cos\frac{15\pi}{8} & \cos\frac{21\pi}{4} \end{pmatrix} \tag{21}$$

where only the top-left corner of a three-qubit unitary is shown, and similar structure block with sine-valued coefficients appears in the right-bottom corner. For a general n-qubit quantum Chebyshev transformation, the unitary transformation can be expressed as

$$\hat{U}_{\text{QChT}}(n) = \sum_{j=0}^{N-1} \left|\tau\left(x_j^{\text{Ch}}\right)\right\rangle \langle j| \tag{22}$$

where $|\tau(x)\rangle$ is given by Equation 11 and $x_j^{\text{Ch}}$ are the Chebyshev nodes.

To the circuit illustrated in **Fig. 5A**, a permutation circuit identical to block **510** can be appended, in order to obtain the type II discrete sine transform. In this case, the input and output ancilla bits are initialized with and measured in $|1\rangle$, respectively.

The quantum Chebyshev transform circuit **500** can be run in reverse direction to perform the inverse quantum Chebyshev transform, which equivalently maps Chebyshev basis states $\left\{|\tau(x_j^{\text{Ch}})\rangle\right\}_{j=0}^{N-1}$ to computational basis states $\{|j\rangle\}_{j=0}^{N-1}$. This is shown explicitly in **Fig. 5B.**

**Fig. 6A** schematically shows a Chebyshev feature map circuit according to an embodiment and **Fig. 6B** schematically shows a quantum Chebyshev transform circuit according to an embodiment. In these examples, the Chebyshev feature map and quantum Chebyshev transform are applied on the extrema grid, rather than the roots grid, of the Chebyshev polynomials of the first kind of degree $k$, $T_k(x)$. This results in different circuits.

The Chebyshev extreme points are defined as $x_j^{\text{Ext}} := \cos\frac{j}{N}\pi, \; j \in [0, N]$. The extrema grid $x_j^{\text{Ext}} \in [-1,1]$ forms a non-equidistant grid over [-1,1], which minimizes the problem of Runge's phenomenon associated with a uniform grid. Specifically, a quantum circuit is described that prepares quantum states $|\tau(x)\rangle$ with specific amplitudes given by $T_k(x)$. Thus, the target state is of the form:

$$|\tau(x)\rangle = \left[\frac{1}{\sqrt{2}}\left(\delta_{j0} + \delta_{jN}\right) + \left(1 - \left(\delta_{j0} + \delta_{jN}\right)\right)\right]\left[\frac{1}{\sqrt{N}}T_0(x)|0\rangle + \frac{\sqrt{2}}{\sqrt{N}}\sum_{k=1}^{N-1}T_k(x)|k\rangle + \frac{1}{\sqrt{N}}T_N(x)|N\rangle\right]$$

$$(23)$$

where $\delta_{jk}$ represents the Kronecker-delta function. The amplitude at the endpoints, $j = 0, N$, is different from that on the interval $j \neq 0, N$, and for the computational zero and $N$ states.

Considering the orthogonality properties of $T_k(x)$, it follows that

$$\frac{T_k(x_0^{\text{Ext}})T_l(x_0^{\text{Ext}})}{2} + \sum_{j=1}^{N-1}T_k(x_j^{\text{Ext}})T_l(x_j^{\text{Ext}}) + \frac{T_k(x_N^{\text{Ext}})T_l(x_N^{\text{Ext}})}{2} = \begin{cases} 0, & 0 \leq k \neq l \leq N \\ N, & k = l = 0, k = l = N \\ N/2, & 0 < k = l < N \end{cases}$$

$$(24)$$

The states in eq. (23) are orthonormal at the Chebyshev extreme points, that is, $\left\langle\tau(x_j^{\text{Ext}})\middle|\tau\left(x_{j'}^{\text{Ext}}\right)\right\rangle = \delta_{j,j'}$. In contrast to the $N$ Chebyshev nodes, there are $N+1$ Chebyshev extreme points, and thus an additional encoding qubit is required to construct $N + 1$ quantum states; in other words, $n+1$ qubits are needed to encode the extrema points of Chebyshev polynomial up to degree $2^n$.

The Chebyshev feature map on the extrema grid, shown in **Fig. 6A,** has essentially the same $\exp(\pm i \arccos(x))$ phase map configuration **602-606** as that on the roots grid described above with reference to **Fig. 4A,** layers **402-406**; however, in this case, there is one additional qubit. The choice of most and least-significant bit (which is in principle an arbitrary choice) has been reversed relative to **Fig. 4A.** This is followed by a layer **608** of ($N/2 - 1$) multi-controlled $x$-dependent scaled $R_z$ gates, which are used to zero out the amplitude of the corresponding 'unused' qubit (i.e., the qubit that was needed to include the additional boundary point, but which is not needed for the encoding in Chebyshev space). The scaled single-qubit rotation gates are defined as:

$$\tilde{R}_Z^{(j)}(x) = R_Z(j \arccos x - \pi) = \begin{bmatrix} \exp\left(-\frac{i}{2}(j \arccos x - \pi)\right) & 0 \\ 0 & \exp\left(\frac{i}{2}(j \arccos x - \pi)\right) \end{bmatrix} \quad (25)$$

where $j$ is the qubit index.

Finally, constant controlled-rotation gates **610** are applied for adjustment of the weight of the $T_0(x)$ and $T_N(x)$ terms, corresponding respectively to $|\varnothing\rangle$ and $|01\varnothing\rangle$ states, are included. Again, a measurement (preceded by an Hadamard gate) is performed at the end (not shown) to allow post-selection of the sum term with the ancilla measured in 0.

**Fig. 6B** schematically shows a quantum Chebyshev transform circuit evaluated at the Chebyshev extreme points. The quantum Chebyshev transform on the Chebyshev extrema grid maps computational basis states $\{|j\rangle\}_{j=0}^N$ into Chebyshev states $\left\{\left|\tau\left(x_j^{\mathrm{Ext}}\right)\right\rangle\right\}_{j=0}^N$. This can be considered similar to the type I discrete cosine transform matrix, $\mathrm{DCT}_N^{\mathrm{I}}$, which forms a set of orthonormal basis states:

$$\mathrm{DCT}_N^{\mathrm{I}} := \frac{\sqrt{2}}{\sqrt{N}}\left[c_k c_j \cos\frac{kj\pi}{N}\right]_{k,j=0,1,\ldots N} \qquad c_k = c_j = \begin{cases} \frac{1}{\sqrt{2}}, & k = 0, n; j = 0, n \\ 1, & k \neq 0, n; j \neq 0, n \end{cases} \qquad (26)$$

As shown in **Fig. 6B,** the quantum Chebyshev transform on the Chebyshev extrema grid involves a QFT circuit **628** applied to $n + 1$ qubits (n-qubit system plus one ancilla), similar to the quantum Chebyshev transform on the roots grid shown in **Fig. 5A.** In this case, however, the QFT circuit is sandwiched between constant phase shift/rotation layers **622,634** and permutation layers **626,630.** Here, a standard phase shift gate is used, defined as $P(\phi) = \mathrm{diag}\{1, \exp(i\phi)\}$ and $R_X$ is a single-qubit rotation about the X axis of the Bloch sphere.

When the input states are of the form $|0\rangle_a|j\rangle$ and $|1\rangle_a|\varnothing\rangle$, the circuit returns a set of $\left\{\left|\tau\left(x_j^{\mathrm{Ext}}\right)\right\rangle\right\}_{j=0}^N$ associated with the input $\{|j\rangle\}_{j=0}^N$. This corresponds to a matrix with 2N rows, of which the last $N - 1$ rows contain zero values and can be disregarded. A representative example of the Chebyshev transform matrix for $n = 2$ is given by:

$$M_{\mathrm{QChTI}}(2) = \frac{1}{\sqrt{2}}\begin{bmatrix} \cos\frac{\pi}{3} & \cos\frac{\pi}{4} & \cos\frac{\pi}{4} & \cos\frac{\pi}{4} & \cos\frac{\pi}{3} \\ \cos\frac{\pi}{4} & \cos\frac{\pi}{4} & \cos\frac{2\pi}{4} & \cos\frac{3\pi}{4} & -\cos\frac{\pi}{4} \\ \cos\frac{\pi}{4} & \cos\frac{2\pi}{4} & \cos\frac{4\pi}{4} & \cos\frac{6\pi}{4} & \cos\frac{\pi}{4} \\ \cos\frac{\pi}{4} & \cos\frac{3\pi}{4} & \cos\frac{6\pi}{4} & \cos\frac{9\pi}{4} & -\cos\frac{\pi}{4} \\ \cos\frac{\pi}{3} & -\cos\frac{\pi}{4} & \cos\frac{\pi}{4} & -\cos\frac{\pi}{4} & \cos\frac{\pi}{3} \end{bmatrix} \qquad (27)$$

Compared with $M_{\mathrm{QChT}}(2)$ for the case of Chebyshev nodes, $M_{\mathrm{QChTI}}(2)$ reveals one extra row and column in the matrix, which accounts for an additional Chebyshev extreme point. For general $n$-qubit quantum Chebyshev transform, the unitary transformation can be expressed as

$$\hat{U}_{\mathrm{QChTI}} = \sum_{j=0}^N \left|\tau\left(x_j^{\mathrm{Ext}}\right)\right\rangle\langle j| \qquad (28)$$

where $|\tau(x)\rangle$ is given by Equation 23 and $\left\{x_j^{\mathrm{Ext}}\right\}$ are the Chebyshev extreme points. The quantum Chebyshev transform circuit can be run in reverse direction to perform the inverse quantum Chebyshev transform, which equivalently maps Chebyshev basis states $\left\{|\tau(x_j^{\mathrm{Ext}})\rangle\right\}_{j=0}^{N}$ back to computational basis states $\{|j\rangle\}_{j=0}^{N}$.

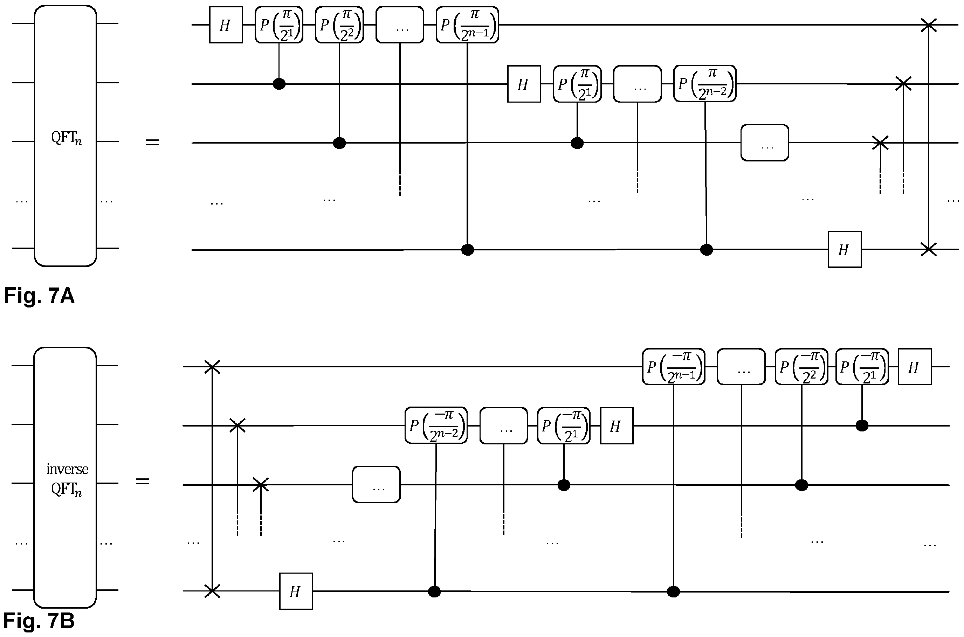

**Fig. 7A** schematically shows an example of a quantum Fourier transform circuit, as may be used in layer **506** of the quantum Chebyshev transform shown in **Fig. 5A** and layer **628** of the quantum Chebyshev transform shown in **Fig. 6B.** Similarly, **Fig. 7B** schematically shows an example of an inverse quantum Fourier transform circuit, as may be used in layer **526** of the quantum Chebyshev transform shown in **Fig. 5B.**

As mentioned before, one of the advantages of the Chebyshev feature map is that it can be analytically differentiated. This can be utilized in solving differential equations, and learning sensitivities of distributions. The model differentiation can be approached in various ways. These are schematically illustrated in Fig. 8A-C.

**Fig. 8A** shows a reference quantum machine learning model (a quantum neural network, QNN-type model). The circuit **800** comprises a Chebyshev feature map $\hat{\mathcal{U}}_\tau(x)$ **802** (corresponding to block **410** in **Fig. 4A**), a variational circuit parametrized by a parameter $\theta$ and a cost function $\mathrm{Re}(|\varnothing\rangle\langle\varnothing|)$ **806,** corresponding to projection on the zero state. A measurement **808** on the ancilla (corresponding to block **410**) is included to select the appropriate sum term, as explained above with reference to **Fig. 4A.**

One option to differentiate the circuit with respect to the input value *x* is to use the parameter shift rule, which is well-known in the art, illustrated in Fig. 8C. This approach is, for example, valid in the training stage when the cost function corresponds to, for example, a projection on the zero state (including ancilla qubit). Application of the parameter shift rule comprises executing the circuit twice for each gate that is dependent on the variable with respect to which the circuit is being differentiated (in this case, the x-dependent gates corresponding to $e^{i\,x}$ and $e^{-1\,2\,x}$, shown in blocks **404** and **406** in **Fig. 4A**), once with the *x*-dependent rotation angle shifted by $+\pi/2$ and once with the x-dependent rotation angle shifted by $-\pi/2$, and summing the results. As there are two x-dependent gates applied to each qubit, the total number of parameter shifts (and hence terms in the final sum) is 4*n,* with *n* the number of encoding qubits. In the notation used in the figure, $\hat{\mathcal{U}}_\tau^{(l^+)}(x)$ means that the rotation gate angle of gate *l* is shifted with $\pi/2$, and analogously *l⁻* refers to a gate angle shift with $-\pi/2$). So, for example, the gate

$$\tilde{P}_{2^j}^{s}(x) = P_{2^j}(s \arccos x) = \mathrm{diag}\left[1, \exp\left(i\,s\frac{N}{2^j}\arccos(x)\right)\right] \qquad (29)$$

is shifted to

$$\mathrm{diag}\left[1, \exp\left(i\,\left(s\frac{N}{2^j}\arccos(x) + \frac{\pi}{2}\right)\right)\right] \qquad (30)$$

(and analogously for $-\pi/2$), one gate at a time (in the current example, essentially, once for each pair $(j, s) \in \{0, ..., n\text{-}1\} \times \{1, -2\}$). This results in 4 *n* modified circuits, which are summed to obtain the derivative circuit.

For the encoding on the extrema grid as shown in **Fig. 6A,** there are an additional $2^n$ - 2 for the *x*-dependent rotations on the ancilla (block **608** in **Fig. 6A**).

In cases where mid-circuit measurements are possible, an alternative differentiation method may be applied. In this case, the controlled phase rotations can be decomposed using CNOT conjugation, and two shifts per individually reuploaded parameter *x* can be applied. This is repeated twice for different bases of the measurement outcomes. Thus, in total, the Chebyshev feature map can be differentiated with 4*n* parameter shifts.

The above approaches are described in more detail in Kyriienko et al., 'Generalized quantum circuit differentiation rules', Phys. Rev. A 104 (052417) -which is hereby incorporated by reference-, in particular in sections II.B and II.C.

Another option, illustrated in **Fig. 8B,** is to differentiate the feature map formally, extracting an effective generator $\hat{\mathcal{G}}_{\mathrm{eff}}$, and taking derivatives as a linear combination of unitaries. For this, the (not necessarily normalised) state $|\tau(x)\rangle$ from eq. (11) is considered, where all the amplitudes are scaled Chebyshev polynomials. The normalised version of this is prepared by the Chebyshev feature map. When taking the derivative with respect to *x* of a model containing $|\tau(x)\rangle$, the resulting model will contain $|\tau'(x)\rangle$ terms. This can be considered a state with each amplitude as scaled Chebyshev polynomial derivatives.

The Chebyshev polynomials and their derivatives are related by:

$$T'_k(x) = k\, U_{k-1}(x) \tag{31}$$

where $U_k(x)$ denotes a Chebyshev polynomial of the second kind of order $k$. This can then be further expanded to:

$$T'_0(x) = 0 \tag{32}$$

$$T'_{2k}(x) = 4k \sum_{m=1}^{k} T_{2m-1}(x) \tag{33}$$

$$T'_{2k+1}(x) = (4k+2) \sum_{m=1}^{k} T_{2m}(x) + (2k+1)\, T_0(x) \tag{34}$$

This means the derivative of a Chebyshev polynomial is a linear combination of lower order Chebyshev polynomials. Therefore, an effective operator $\hat{\mathcal{G}}_{\text{eff}}$ can be extracted such that:

$$|\tau'(x)\rangle = \hat{\mathcal{G}}_{\text{eff}} |\tau(x)\rangle. \tag{35}$$

The operator $\hat{\mathcal{G}}_{\text{eff}}$ is non-unitary, but can be implemented using known techniques to implement non-unitary operators, such as a linear combination of unitaries or embedding in a higher-order space.

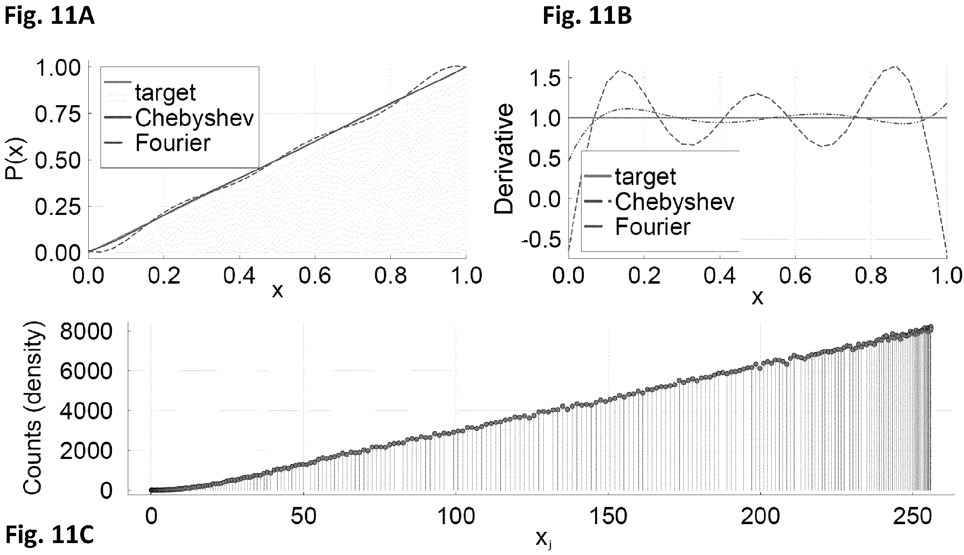

For the DQGM model described below with reference to **Fig. 11,** the following approach was used. The probability density function $p_\theta(x)$ is given by:

$$p_\theta(x) = |\langle \tau(x)|\psi_\theta\rangle|^2 = \mathcal{N}(x)\, \mathcal{N}^\dagger(x)\, |\langle \tilde{\tau}(x)|\psi_\theta\rangle|^2 \tag{36}$$

Here $|\tilde{\tau}(x)\rangle$ is $|\tau(x)\rangle$ normalised and $\mathcal{N}(x)$ is the norm of $|\tau(x)\rangle$. Then the derivative (using the product rule) is:

$$\begin{aligned} p_\theta(x) &= \langle \tau'(x)|\psi_\theta\rangle \langle \psi_\theta|\tau(x)\rangle + \langle \tau(x)|\psi_\theta\rangle \langle \psi_\theta|\tau'(x)\rangle \\ &= \langle \tau(x)|\hat{\mathcal{G}}^\dagger_{\text{eff}}|\psi_\theta\rangle \langle \psi_\theta|\tau(x)\rangle + \langle \tau(x)|\psi_\theta\rangle \langle \psi_\theta|\hat{\mathcal{G}}_{\text{eff}}|\tau(x)\rangle \\ &= \mathcal{N}(x)\, \mathcal{N}^\dagger(x)\left(\langle \tilde{\tau}(x)|\hat{\mathcal{G}}^\dagger_{\text{eff}}|\psi_\theta\rangle \langle \psi_\theta|\tilde{\tau}(x)\rangle + \langle \tilde{\tau}(x)|\psi_\theta\rangle \langle \psi_\theta|\hat{\mathcal{G}}_{\text{eff}}|\tilde{\tau}(x)\rangle\right) \end{aligned} \tag{37}$$

As an example, the application of the Chebyshev feature map and quantum Chebyshev transform to generative modelling is shown. Generative modelling can be used to, for example, approximate the distribution of underlying asset prices with the Black-Scholes pricing model.

**Fig. 9A** and **9B** schematically show, respectively, DQGM training and sampling process according to embodiments. **Fig. 9A** shows a training stage **904** for training quantum neural network and **Fig. 9B** shows a sampling stage **910,** wherein a quantum circuit is used for generating samples.

In the training stage, a latent space quantum model representation is used, where a Chebyshev feature map $\hat{U}_\tau(x)$ **902** is directly followed by variational circuit $\tilde{U}_{\tilde{\theta},t}$ **906** and a cost function

$$\langle \hat{C} \rangle$$

**918** for measuring the output of the latent space model $\hat{U}_\tau(x)\,\tilde{U}_{\tilde{\theta},t}$. This latent space quantum model representation may be referred to as a quantum neural network (QNN). Thus, the QNN defines a variational quantum circuit that is trained to represent a function or value, in this particular case a probability density function.

The training of the QNN includes initialization of the qubits **900** in an initial state, the application of a quantum feature map unitary **902** to map a real parameter $x$ into the Hilbert space (which may be regarded as the "input $x$ to the QNN"), the application of a variational quantum circuit **906** (an Ansatz) parameterized by 'variational parameters' $\theta$, as well

as fixed additional parameters t governing the shape of probability distribution that is modelled and a measurement of a cost function value

$$\langle \hat{\mathcal{C}} \rangle$$

on the qubits of the quantum computer, wherein the cost function value represents the probability density function value evaluated at

$$x, p_{\Theta,t}(x) = \langle \hat{\mathcal{C}} \rangle$$

**918.** In this example, the QNN cost function is assumed to be a $\rho_0$ state or a local cost operator, and can be measured by Hamiltonian averaging, QPE, state-overlap or other operator estimation techniques.

**Fig. 9B** shows the sampling stage **910.** At the sampling stage, the trained variational circuit **916** is daggered (resulting in an operator $\tilde{\mathcal{U}}^{\dagger}_{\tilde{\theta}_{\mathrm{opt},t}}$ ) and the model from the latent space is mapped to a bit space using quantum Chebyshev transform $\hat{\mathcal{U}}_{\mathrm{QChT}}$ **912,** while the Chebyshev feature map and inverse basis transformation are treated as projective measurement and are subsumed in a sampling process **914.**

The DQGM training and sampling as described in more detail in PCT/EP2023/052998, in particular with reference to Fig. 7A.

**Fig. 11A** and **11B** show numerical results of a Chebyshev feature map used for DQGM according to an embodiment. In this example, an asset is considered whose price follows a geometric Brownian motion under the risk-neutral measure. At time $t$, the price $S_t$ is governed by the stochastic differential equation $dS_t = \mu\, S_t\, dt + \sigma\, S_t\, dW_t$ with constant drift $\mu$, constant volatility $\sigma$ and stochastic process $W_t$. Applying the Black-Scholes model gives the solution $\ln(S_t) = \ln(S_0) + \left(\mu - \frac{\sigma^2}{2}\right)t + \sigma\, W_t$ , implying that the underlying asset price is itself lognormally distributed with probability density function

$$\mathbb{P}(S_t) = \frac{1}{S_t\, \sigma\, \sqrt{2\pi t}} \exp\left( \frac{\left(-\ln\left(\frac{S_0}{S_t}\right) + \left(\mu - \frac{\sigma^2}{2}\right)t\right)^2}{2\sigma^2\, t} \right) \qquad (38)$$

To train the model, the differentiable quantum generative models (DQGM) framework is utilised. This begins with training the lognormal distribution in the latent space with the Chebyshev feature map $\hat{\mathcal{U}}_{\tau}(x)$ shown in **Fig. 9A** and then sampling from the distribution in the computational basis using the Chebyshev transform circuit $\hat{\mathcal{U}}_{\mathrm{QChT}}$ shown in **Fig. 9B.**

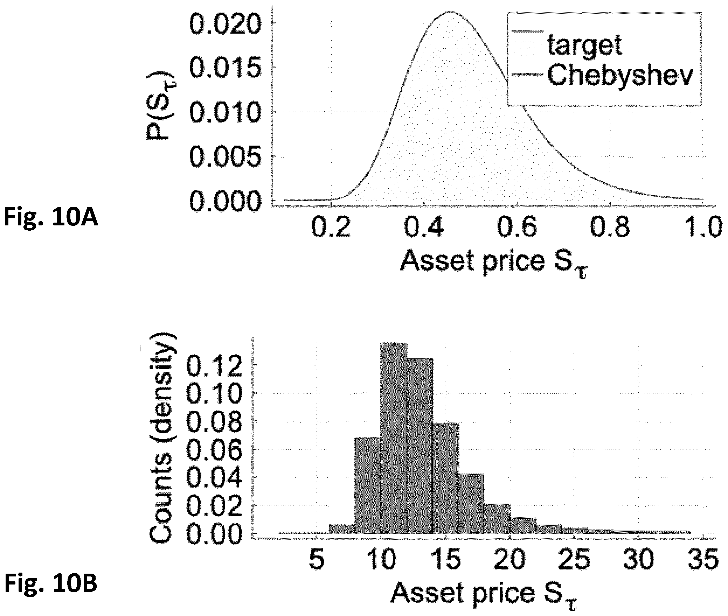

The results in **Fig. 10A** and **10B** show the outcome of training two lognormal distributions using $n = 5$ qubits with a variational hardware efficient Ansatz $\hat{V}_\theta$ of depth $d = 50$. A mean squared error loss is employed with a learning rate of 0.005, simulated over 5000 epochs using Julia's Yao package. The training grid consists of non-negative Chebyshev nodes $x_j^{\mathrm{Ch}}\ \forall j \in [0, N/2]$ , and the evaluation was performed at mid-points between the Chebyshev nodes. It is noted that at the scale used, there is no visible distinction between target and fit. The normalized histogram in **Fig. 10B** shows the resulting sampled distributions, where $10^6$ shots are used.

The success of representing a distribution (the goodness of fit) is defined by the expressivity of the model used to learn it. When skewed lognormal distributions from increasing drift are considered, ripples appear in the training distribution where the model is unable to train effectively in-between the training points. When narrowed lognormal distributions from decreasing volatility are considered, the precision of the training model diminishes as it becomes more difficult to identify the peak of the distribution.

As a further example, **Fig. 11A** shows the training of a linear distribution with probability density function $\mathbb{P}(x) = x$, using $n = 2$ qubits and an Ansatz of depth 6, with hyperparameters defined as before. The figure includes a comparison between training with the quantum Chebyshev model versus training with the quantum Fourier model on the same underlying distribution. The derivatives of the respective generative models are shown in **Fig. 11B.** Here it is seen that the Chebyshev derivative is more stable than the Fourier derivative (especially close to the boundaries), which is an important consideration for solving differential equations. The plot in Fig. 11C shows the sampled distribution of the linear quantum Chebyshev model using an extended register consisting of $n = 8$ qubits. The widths of the bars of underlying histogram for this plot have been adjusted to reflect the non-uniform Chebyshev node grid.

The proposed framework for building quantum models based on Chebyshev models can be used in various ways. First, as shown above, due to orthonormality and mapping to computational basis the prepared models are readily sampled and extended over larger registers. Second, the preparation of the implicit model can be seen as loading of an amplitude encoded state, which is required for solving systems of linear (and differential) equations. Third, the toolkit can be used for solving differential equations, both in the latent space and in the computational space, making the bridge between the two. Specifically, the Chebyshev basis is highly preferred for classical spectral methods, and is *de facto* a standard in approximation theory. Additionally, the mapping allows simple incorporation of boundary conditions with explicit encoding — a problem that has been noted when dealing exclusively with amplitude encoding (i.e., implicit models). Fourth, quantum Chebyshev models can be readily employed in explicit QML models concerning classification, regression, and anomaly detection, both in the variational and kernel-based settings (and targeting cases where high model expressivity is required).

Other extensions to the described framework correspond to multi-dimensional (multi-variate) modelling. For this parallel reuploading can be employed, where $\otimes_{\ell=1}^{L} \hat{U}_{\tau}(x_{\ell})$ embeds dependence on the vector of variables $\mathbf{x} = (x_1, ..., x_L)$. The maps can follow the tensorial structure, and models can be either via shared preparation unitary $\hat{V}_{\theta}$ acting on $L N$ qubits, or exploit copula-type models when dealing with multivariate probability distributions.

It is noted that the Chebyshev feature map and/or quantum Chebyshev transform can also be used outside of a quantum machine learning context. For example, the Hamiltonian dynamics $\exp(-i\, t\, \hat{\mathcal{H}})$ can also be seen as an embedding of the time variable t, with features defined by the spectrum of the Hamiltonian $\hat{\mathcal{H}}$. In this case, an explicit quantum model with spectral features in the Fourier space is obtained. This is usually processed via a QFT for reading out relevant energies. However, alternative quantum walk operators in the modified form of exp $\exp\left(i\, \arccos(t\, \hat{\mathcal{H}})\right)$ have been shown to lead to significant computational improvements. From the quantum machine learning side, this quantum walk operators implicitly embed Chebyshev-type features. Transforming them into bit-basis states is another use of the quantum Chebyshev transform.

**Fig. 12A** is a hardware-level schematic of the actions effectuating the logical operations shown in circuit diagrams such as **Figs. 4-9.** Unitary operators, e.g. those to encode the quantum kernel feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **1202.** Then, for example a series of single-qubit pulses is sent to the qubit array in **1204,** which may apply a single-layer feature map. Additionally, two-qubit pulse sequences can be used to effectively entangle multiple qubits with a feature map **1206.** The duration, type, strength and shape of these pulses determine the effectuated quantum logical operations. **1208** indicates a 'break' in the depicted timeline, which means the sequence of gates may be repeated in a similar fashion in the direction of the time axis **1212.** At the end of the pulse sequences, one or more of the qubits are measured **1210.**

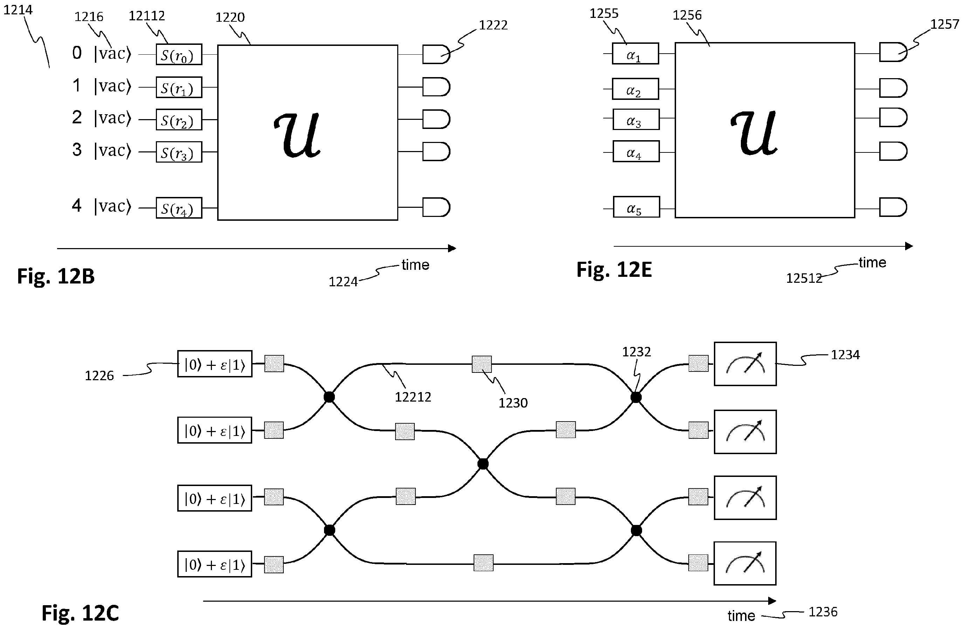

**Fig. 12B** is a hardware-level schematic of the actions effectuating the logical operations shown in circuit diagrams such as **Figs. 4-9,** specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **1214** are all in the vacuum state **1216,** which are then squeezed to produce single-mode squeezed vacuum states **1218.** The duration, type, strength and shape of controlled-optical gate transformations determine the effectuated quantum logical operations **1220.** At the end of the optical paths, one or more modes are measured with photon-number resolving, Fock basis measurement **1222,** tomography or threshold detectors.

**Fig. 12C** is a hardware-level schematic of the actions effectuating the logical operations shown in circuit diagrams such as **Figs. 4-9,** specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parametrised way.

Initially the modes **1226** are all in a weak coherent state, which is mostly a vacuum state with a chance of one or two photons and negligibly so for higher counts. Subsequently, the photons travel through optical waveguides **1228** through delay lines **1230** and two-mode couplers **1232** which can be tuned with a classical control stack, and which determines the effectuated quantum logical operations.

At the end of the optical paths, one or more modes are measured with photon-number resolving **1234,** or threshold detectors.

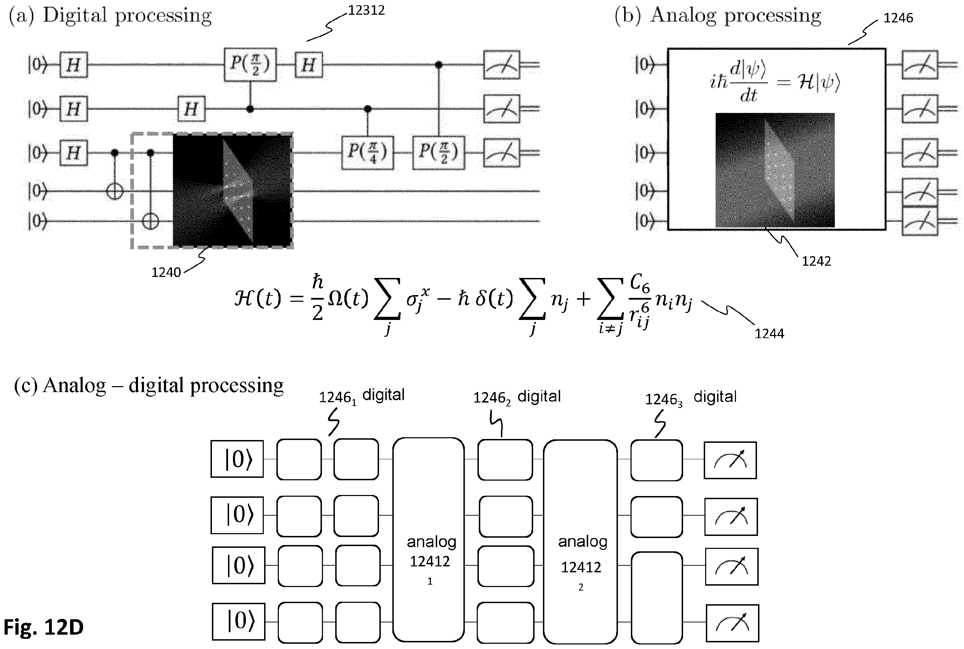

**Fig. 12D** is a hardware-level schematic of the actions effectuating the logical operations shown in circuit diagrams such as **Figs. 4-9,** which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 12D** depicts a digital quantum circuit **1238,** wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit operations.

Schematic (b) of **Fig. 12D** depicts an analog mode **1246** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **1244** of the atomic array in an analog way. The combined quantum wavefunction evolves according to Schrödinger's equation, and particular,

unitary operators $\hat{\mathcal{U}} = \mathrm{e}^{-\mathrm{i}\hat{\mathcal{H}} t}$, where $\hat{\mathcal{H}}$ denotes the Hamiltonian and t the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 12D** depicts an example of such digital-analog quantum circuit, including blocks **1246**$_{1-3}$ of digital qubit operations (single or multi-qubit) and analog blocks **1248**$_{1-3}$.

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

**Fig. 12E** is a hardware-level schematic of the actions effectuating the logical operations shown in **Figs. 4-9,** specified for a photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way.

Initially the photons **1255** are in Fock states, weak coherent states or coherent states. The duration, type, strength and shape of controlled-optical gate transformations determine the effectuated quantum logical operations **1256.**

At the end of the optical paths, the modes are measured with photon-number resolving, Fock basis measurement **1257,** tomography or threshold detectors.

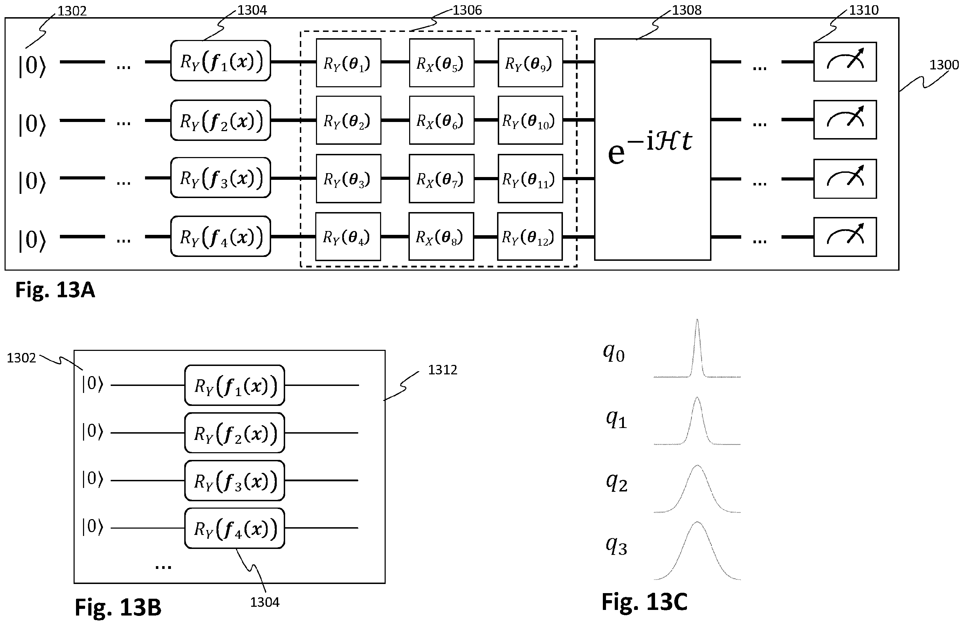

The hardware implementation shown in **Fig. 12A-12E** may also be used to implement the quantum circuits shown in **Fig. 13-16,** as applicable.

**Fig. 13A** depicts a system describing a Digital-Analog implementation of a quantum algorithm. In particular, **Fig. 13A** represents a Digital-Analog implementation where the qubit interactions can be switched on and off and there exists single-qubit addressability for the application of single-qubit gates, a process described in **1300.** In order to transform the internal states of these qubits, a classical control stack may be used to send information to a controller that affects one or more qubits. The controller may send multiple information carriers (e.g., pulses) in time and for each qubit independently. An initialization protocol is used to initialize the qubits, in this example into the $|0\rangle$ state **1302.** The current example shows only four qubits, but the same principles may be extended in a straightforward manner to systems with more (or less) than four qubits.

Then, a quantum feature map is applied **1304** to encode quantum information, e.g., an input variable, into a Hilbert space associated with the quantum processor.

Following application of the feature map, a variational Ansatz is applied, implemented as a variational quantum circuit **1306.** In the current example, the variational Ansatz comprises three single-qubit gates $R_Y$ - $R_X$ - $R_Y$ with different rotational angles $\theta_i$. These single-qubit gates are typically sets of standardized or 'digital' rotations on computational states applied to different qubits with different rotation angles/parameters. These digital gates include any single-qubit rotations according to the $\theta_i$ argument of the rotation. A single rotation/single-qubit gate is not sufficient to perform arbitrary rotation regardless of the parameter/angle since it can only rotate over a single axis. In order to accomplish a general rotation block, three gates in series with different rotation angles/parameters can be used, in this example represented by a block of single-qubit gates **1306.**

Then, the entanglement in this Digital-Analog approach is generated by a wavefunction evolution **1308,** described by the block $e^{-i\mathcal{H}t}$. During this evolution, the qubits are interacting amongst themselves, letting the system evolve for a specified amount of time. This process produces the necessary entanglement in the system. The combined quantum wavefunction evolves according to Schrödinger's equation, and particular unitary operators $\hat{\mathcal{U}} = e^{-i\mathcal{H}t}$ in which $\mathcal{H}$ is the Hamiltonian of the system (for example, for neutral atoms the Hamiltonian that governs the system is

$$\mathcal{H} = \sum_{j \neq k} \left(\frac{C_6}{r_{jk}^6}\right) * \hat{n}_j * \hat{n}_k$$

with $\hat{n}$ being the state occupancy of the Rydberg atoms), and t is the evolution time. In this way, a parametric analog unitary block can be applied, which entangles the atoms and can act as a variational Ansatz.

After the evolution of the wavefunction **1308,** another set of single-qubit gates may be applied, similar to the process described in the block of gates $R_Y$ - $R_X$ - $R_Y$ **1306.**

Then, the wavefunction may be evolved once more, and finally a measurement in the computational basis occurs as described in **1310.**

Optionally, additional steps may be included, represented by the ellipses, e.g., before, after, or in between the blocks shown. For example, a different initial state than 10) may be prepared prior to application of the feature map. Furthermore, the blocks can be executed in a different order, for instance, in some embodiments, block **1308** might precede block **1306.** One or more of the blocks **1304-1308,** or variations thereof, may be repeated one or more times prior to the measurement **1310.**

**Fig. 13B** represents a typical quantum feature map **1312** that starts by preparing the quantum register to the 10) quantum state **1302** and then applying single-qubit rotations in all of the qubits with (typically) different rotation angles **1304.** In this example, single qubit rotations **1304** (here chosen as $R_Y(f_i(\boldsymbol{x}))$) act on each qubit individually and are parametrized by a variable $\boldsymbol{x}$. For a non-linear feature map encoding such as the Chebyshev feature map, the variable $\boldsymbol{x}$ may be used as an angle of rotation.

The application **1304** of one rotation operation to each qubit in a register may be referred to as a single layer of rotation operations. This type of encoding of classical information into quantum states is known as angle encoding, which means that a data vector is represented by the angles of a quantum state. Angle encoding can be found in many Quantum Machine Learning algorithms, with the main advantage being that it only requires $n = \log_N M$ qubits to encode a dataset of $M$

inputs with *N* features each. Thus, considering an algorithm that is polynomial in *n*, it has a logarithmic runtime dependency on the data size.

**Fig. 13C** illustrates different pulses (potentially differing in pulse duration and/or amplitude/height) that can be sent to the quantum circuit (different qubits) to encode the classical information. The angle of the rotation that is described by the $f_i(x)$ dictates the duration and geometry of the pulse.

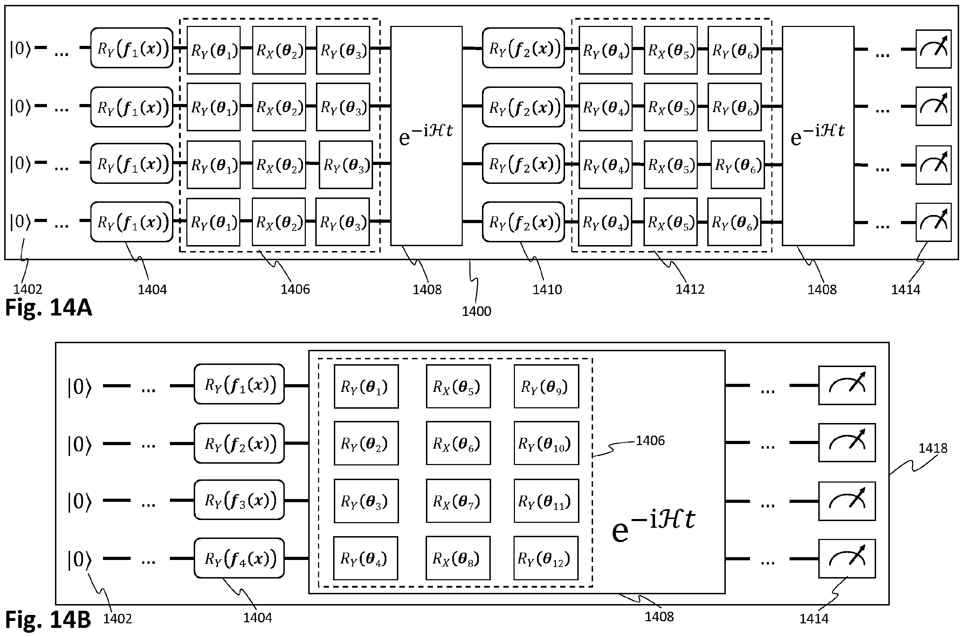

**Fig. 14A** presents a quantum circuit based on a Digital-Analog implementation **1400** that has no single-qubit addressability and uses a wavefunction evolution that can be turned on and off for the entanglement generation. **Fig. 14A** differs from **Fig. 13A** in that it shows a technique known as data re-uploading that alters the quantum feature map **1404** and **1410.** Loading classical data into a quantum system is a non-trivial task, and uploading large amounts of data makes it an even more critical issue. However, when the case of big-data is not considered, techniques like data re-uploading can be utilized. As the name suggests, this entails uploading the classical data multiple times, and encode them via rotational angle/parameter encoding into single-qubit rotations throughout the quantum circuit. Such a data re-uploading technique may start by setting the quantum register to an initial state, e.g., the all-zero state **1402,** followed by angle encoding that is based on a feature map **1404,** in this case a tower feature map.

Following that, as already explained above with reference to **1306,** three single-qubit gates in series are used to perform a general rotation block that acts as the Ansatz **1406.** In this example the encoding is done through the $\theta_i$ variable of the $R_Y$-$R_X$-$R_Y$ rotations; however, any type of combined rotations of the type ($R_X$, $R_Y$, $R_Z$) could be applied here. Since there is no single-qubit addressability in this example, each $R_Y$ and $R_X$ gate is applied at all qubits simultaneously with the same rotation angle $\theta_i$. Subsequently, the wavefunction is allowed to evolve for a specified amount of time **1408.**

Then the classical data are re-uploaded through angle encoding into single-qubit rotations **1410.** However, each time the (same) data are uploaded, the information is encoded using different angles than in the previous data uploading steps. For example, the amount of rotation may be doubled in each data (re-)uploading step **1404,1410** (i.e., the rotational angle of the might be increasing as 1-2-4, etc.).

Once again, the rotations $R_Y$-$R_X$-$R_Y$ are applied to all qubits simultaneously with the same rotation angle for each single qubit gate, but different than **1406.** The classical information can be repeatedly encoded into the quantum feature map through the data re-uploading technique, while changing the angle of the single qubit rotational angle (**1404, 1410,** etc.) every time after the wavefunction evolution. The resulting quantum feature map can become more expressive as a tower feature map by doing this process of serial data re-uploading with different levels of rotational angles every time the re-uploading is done.

**Fig. 14B** illustrates a different (and at current technology levels more realistic) form of a Digital-Analog implementation. In this implementation, the system has single-qubit addressability, but the wavefunction evolution cannot be turned off, thus staying always on. This system requires less control over the qubit interactions (since they are always on) and only requires single-qubit addressability.

The single-qubit gates are applied while the wavefunction evolution (qubit interaction) is also happening. In the shown example, the quantum circuit **1418** starts by encoding information in the 10) quantum state **1402,** followed by a quantum feature map **1404** (analogous to **1304**).

Then, a variational Ansatz is applied, comprising both wavefunction evolution $e^{-i\mathcal{H}t}$ **1408** and simultaneous application of a block of single-qubit gates **1416** (similar to block **1306**). After multiple repetitions of block **1416,** each time with different rotational angles at the single-qubit gates, the circuit ends with a measurement in the computational basis **1414.**

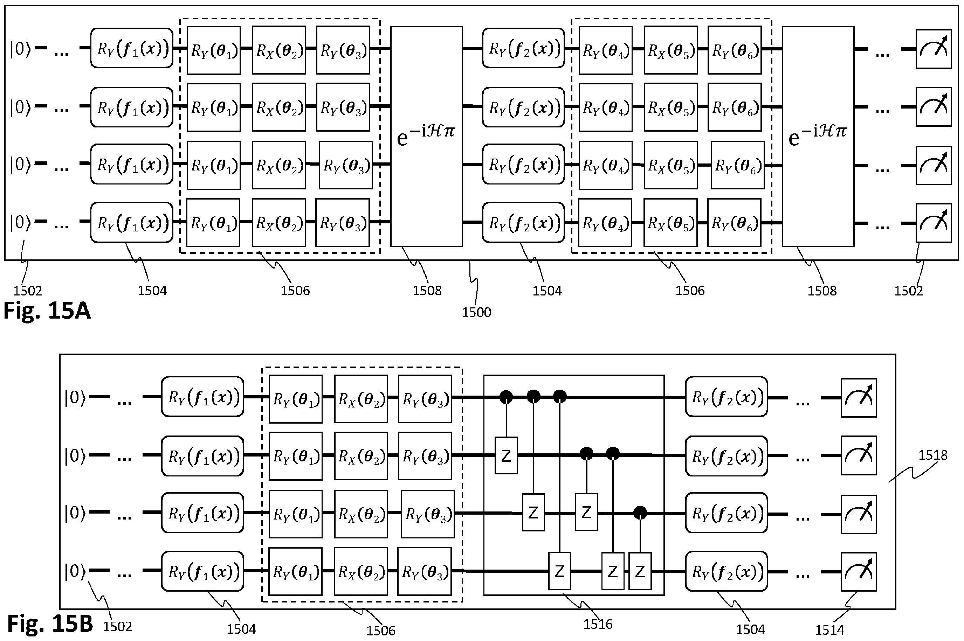

**Fig. 15A** illustrates a quantum circuit **1500** that implements a Digital-Analog implementation with single-qubit addressability, wherein the wavefunction evolution (e.g., atom interactions) can be turned on and off. This quantum circuit is equivalent to the quantum circuit in **Fig. 14A,** with the time of the wavefunction evolution **1508** being $t = \pi$ (in dimensionless coordinates), while all other operations are the same as the ones described in **1400.** The same technique of data re-uploading with a tower feature map **1504, 1510** and the same Ansatz comprising single-qubit gates **1506,1512** followed by wavefunction evolution **1508** are used (all similar to **1400**).

The reason that such a specific time period for the wavefunction evolution **1508** is selected, is due to the fact that such evolution results in the application of Controlled-Z (CZ) gates between pairs of qubits. The benefit of describing the wavefunction evolution as a set of CZ gates lies in the fact that this Digital-Analog implementation of a quantum circuit resembles the structure of the equivalent Digital quantum circuit, which instead of the operation **1508** performs a set of CNOT gates between pairs of qubits included in the quantum circuit. This allows more straightforward comparisons to be drawn between the Digital and Analog implementation of such feature maps, and to evaluate their relative performance.

**Fig. 15B** illustrates a quantum circuit that implements a Digital-Analog implementation with single-qubit addressability **1518,** similar to **1500,** but with the entanglement generated via CZ gates between the qubits, resembling the atom interaction / entanglement generation.

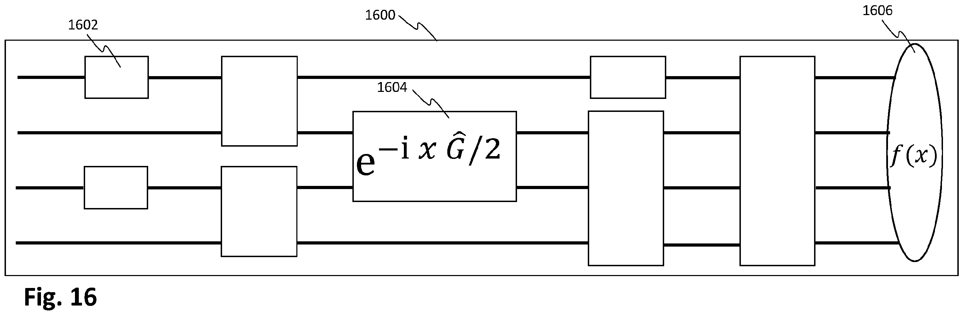

**Fig. 16** presents a workflow for generalized circuit differentiation. In Quantum Machine Learning (QML) algorithms, various quantum feature maps and Parametric Quantum Circuits (PQCs) are typically utilised to express the circuit required to solve a particular problem. These quantum circuits contain tuneable parameters that use a classical optimizer to find the optimal values of the parameters that exist for that formulation. The differentiation required for most parameter optimization methods can be achieved in various ways, with the most common one being the Parameter Shift Rule (PSR). An example of such kind of differentiation for quantum feature maps is presented in **Fig. 8.**

One way to calculate analytic derivatives of quantum circuits is by measuring overlaps between quantum states.

Analytic derivatives can be used for differentiating unitaries like the one presented in **1604,** e.g., $\hat{U} = e^{-i\,x\,\hat{G}/2}$ generated by arbitrary Hermitian generator $\hat{G}$. However, in order to have a less resource-intensive method for differentiation, the parameter shift rule (PSR) was proposed. The PSR algorithm can provide analytic gradient estimations through measurement of the expectation values, with gate parameters being shifted to different values. The PSR algorithm is much used to perform differentiation for QML algorithms; however, it is only valid for a specific type of generators, viz., generators that are involutory or idempotent. This is because the full analytic derivative only requires 2 measurements of expectation values (2 unique eigenvalues). Although this simplifies the differentiation protocol, it also restricts it to only work for a certain type of generators.

Therefore, as an improvements and generalizations of the PSR algorithm, in **1600** a scheme for a Generalized Parametric Shift Rule (GPSR) algorithm is shown. Such approach allows for differentiating generic quantum circuits with unitaries generated by operators with a rich spectrum (i.e., not limited to idempotent generators). The GPSR algorithm is based on spectral decomposition, and showcases the role of the eigenvalue differences (spectral gaps) during differentiation for the generator spectrum. Such approach works for multiple non-degenerate gaps, in contrast to the PSR that is only valid for involutory and idempotent operators with a single unique spectral gap.

A workflow for generalized circuit differentiation can be described as follows: create a quantum circuit that encodes the function $f$ similar to **1600** including single- and multi-qubit gates **1602.** Pick a unitary operator such as

$$\hat{U}(x) = \exp\left(-i\,x\,\hat{G}/2\right)$$

**1604** that is parametrized by some tuneable parameter x, and study the spectrum of its generator G. Then, using unique and positive spectral gaps, a system of equations that includes the spectral information can be created, alongside the calculated parameter shifts, and the measured function expectation values as shifted parameters. The solution of such system can provide the analytical derivative for any general generator G and thus perform GPSR. GPSR is described in more detail in Kyriienko et al., 'Generalized quantum circuit differentiation rules', Phys. Rev. A 104 (052417), which is hereby incorporated by reference.

**Fig. 17A** depicts a system for determining a solution for an computational problem using a hybrid quantum computer system according to an embodiment. The system **1702** may include a quantum computer system **1704** comprising one or more quantum processors **1708,** e.g. a gate-based qubit quantum processor, and a controller system **1710** comprising input output (I/O) devices which form an interface between the quantum processor and the outside world, e.g., the one or more classical processors of a classical computer **1706.** For example, the controller system may include a system for generating control signals for controlling the quantum processing elements. The control signals may include for example a sequence of pulses, e.g. microwave pulses, voltage pulses and/or optical pulses, which are used to manipulate qubits. Further, the controller may include output device, e.g. readout circuits, for readout of the qubits and the control signals for readout of the quantum processing elements, e.g. a readout pulse for reading a qubit. In some embodiments, at least a part such readout circuit may be located or integrated with the chip that includes the qubits.

The system may further comprise a (purely classical information) input **1712** and an (purely classical information) output **1714.** The data processor systems may be configured to solve an optimization problem using the quantum computer. Input data may include information about the optimisation problem one wishes to solve. This information may include training data such as input-output pairs, a differential equation, boundary conditions, initial values, regularization values, etc. The input data may be used by the system to construct quantum circuits, in particular quantum feature maps and/or parametrized quantum circuits, and to classically calculate values, e.g. sequences of pulses, which may be used to initialize and control qubit operations according to the quantum circuit. To that end, the classical computer may include a quantum circuit generator **1707.** The input data may be used by the system to classically calculate values, e.g. parameter settings, which may be used to initialize the quantum circuit that is implemented on the quantum processor. Similarly, output data may include loss function values, sampling results, correlator operator expectation values, optimisation convergence results, optimized quantum circuit parameters and hyperparameters, and other classical data.

Each of the one or more quantum processors may comprise a set of controllable quantum processing elements, e.g. a set of controllable two-level systems referred to as qubits. The two levels are $|0\rangle$ and $|1\rangle$ and the wave function of a N-qubit quantum processor may be regarded as a complex-valued superposition of $2^N$ of these (distinct) basis states. The embodiments in this application however are not limited to qubits but may include any multi-level quantum processing elements, e.g. qutrits, that is suitable for performing quantum computation. Examples of such quantum processors include noisy intermediate-scale quantum (NISQ) computing devices and fault tolerant quantum computing (FTQC) devices.

The quantum processor may be configured to execute a quantum algorithm in accordance with the gate operations of a quantum circuit. The quantum processor may be implemented as a gate-based qubit quantum device, which allows initialization of the qubits into an initial state, interactions between the qubits by sequentially applying quantum gates between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state.

Furthermore, the one or more quantum processors may comprise a set of continuous variable systems, such as optical or photonic quantum computers. Furthermore, the quantum processor may comprise a Gaussian Boson Sampling device as described above with reference to **Fig. 12C** or any of the other hardware described above with reference to Fig. 12A-E.

In some embodiments, the first data processor system may be implemented as a software program for simulating a quantum computer system **1704** comprising a quantum processor system **1708.** Hence, in that case, the software program may be a classical software program that runs a classical computer **1706** so that quantum algorithms can be developed, executed and tested on a classical computer without requiring access to a hardware implementation of the quantum processor system.

**Fig. 17B** is a block diagram illustrating an exemplary classical data processing system described in this disclosure, for example classical computer **1706.** Classical data processing system **1720** may include at least one processor **1722** coupled to memory elements **1724** through a system bus **1726.** As such, the data processing system may store program code within memory elements **1724.** Further, processor **1722** may execute the program code accessed from memory elements **1724** via system bus **1726.** In one aspect, data processing system may be implemented as a computer that is suitable for storing and/or executing program code. It should be appreciated, however, that data processing system **1720** may be implemented in the form of any system including a processor and memory that is capable of performing the functions described within this specification.

Memory elements **1724** may include one or more physical memory devices such as, for example, local memory **1728** and one or more bulk storage devices **1730.** Local memory may refer to random access memory or other non-persistent memory device(s) generally used during actual execution of the program code. A bulk storage device may be implemented as a hard drive or other persistent data storage device. The classical data processing system **1720** may also include one or more cache memories (not shown) that provide temporary storage of at least some program code in order to reduce the number of times program code must be retrieved from bulk storage device **1730** during execution.

Input/output (I/O) devices depicted as key device **1732** and output device **1734** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **1736** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **1720.**

As pictured in **FIG. 17B,** memory elements **1724** may store an application **1738.** It should be appreciated that classical data processing system **1720** may further execute an operating system (not shown) that can facilitate execution of the application. Application, being implemented in the form of executable program code, can be executed by classical data processing system **1720,** e.g., by processor **1722.** Responsive to executing application, data processing system may be configured to perform one or more operations to be described herein in further detail.

In one aspect, for example, classical data processing system **1720** may represent a client data processing system. In that case, application **1738** may represent a client application that, when executed, configures classical data processing system **1720** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1738,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed.

The description of the present embodiments has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A method for solving a computational problem using a hybrid quantum computer system comprising a classical computer and a quantum register, the method comprising:

   receiving or determining one or more quantum circuits comprising gate operations on quantum elements of the quantum register, one or more quantum circuits including:

   - a Chebyshev feature map comprising gate operations for encoding one or more input features x, for example one or more data points or function variables, associated with the computational problem in the Hilbert space of the quantum elements of the quantum register, the gate operations being configured to encode the one or more input features $x$ in amplitudes of a set of orthogonal basis states of the quantum register, wherein the amplitudes are based on one or more Chebyshev polynomials of order $k$, $T_k(x), k = 0, ..., N - 1$, wherein $N$ is a number of available basis states of the quantum register;
   - a further quantum circuit, for example a variational quantum circuit, comprising gate operations determined by the computational problem;

   executing the gate operations of the quantum circuit, the execution of the gate operations including translating the gate operations into control signals for controlling the quantum elements of the quantum register and for readout of the quantum elements to obtain hardware measurement data; and
   determining information associated with a solution to the computational problem based on the hardware measurement data.

2. The method as claimed in claim 1, wherein the Chebyshev feature map defines gate operations on quantum elements for encoding the one or more input features $x$ and on a quantum element that is used as an ancilla for the encoding quantum elements, wherein the Chebyshev feature map includes:

   a first sub-circuit configured to prepare the quantum elements in a superposition of basis states;
   a second sub-circuit configured to encode the Chebyshev polynomials based on phase gates, wherein at least part of the phase gates are controlled by the ancilla;
   a third sub-circuit for adjusting a norm of the zeroth-order Chebyshev polynomial; and/or
   a fourth sub-circuit for selecting a sum term based on the state of the ancilla.

3. The method as claimed in claim 1 or 2, wherein the computational problem relates to solving one or more equations, for example differential equations, and wherein the quantum circuit defines gate operations of a trainable quantum model of a target function representing a solution to the one or more one or more equations; and, wherein the execution of the quantum circuit includes training a quantum model to approximate the target function by extremising a cost or loss function value.

4. The method as claimed in claim 3, wherein the training includes: translating the gate operations of the quantum circuit into control signals for controlling quantum elements of the quantum register and readout of the quantum elements to obtain hardware measurement data;

   executing the gate operations of the quantum circuit based on the control signals; determining an estimated target function and, optionally, one or more derivatives of the estimated target function, based on the hardware measurement data;
   computing a loss or cost function value based on the estimated target function and the one or more derivatives of the estimated target function, adjusting one or more variational parameters and repeating the execution of the gate operations of the quantum circuit, and determining the estimated target function until the computed loss or cost function value indicates that the estimated target function matches a solution to the one or more equations and, optionally, one or more associated boundary conditions.

5. The method as claimed in any one of the preceding claims, wherein the one or more input features $x$ are selected from a Chebyshev grid of degree $N$.

6. The method as claimed in any one of the preceding claims, wherein the Chebyshev polynomial is a Chebyshev polynomial of the first kind or a Chebyshev polynomial of the second kind.

7. The method as claimed in any one of the preceding claims, the method further comprising:

receiving or determining a differentiated quantum circuit, the differentiated quantum circuit comprising gate operations for encoding, for each of the one or more input features, a value $\alpha\, T_k'(x), k = 0, \dots, N-1$ in the amplitudes the set of basis states of the quantum register, wherein $T_k'$ represents a derivative of the Chebyshev polynomial of order $k$ with respect to the one or more input features, wherein the differentiated quantum circuit is obtainable by one of:

- applying the parameter shift rule to the encoding quantum circuit;
- performing (mid-)circuit measurements on the encoding quantum circuit with symmetrically shifted data points; or
- determining analytical derivatives for the Chebyshev polynomial of order $k$, $k = 0, \dots, N - 1$, expressing the analytical derivatives in terms of lower-order Chebyshev polynomials, and determining a series of quantum circuits configured to encode the lower-order Chebyshev polynomials as an effective unitary transformation.

8. The method as claimed in any one of the preceding claims, wherein the further quantum circuit comprises a variational quantum circuit, the method further comprising:
variationally optimising a parameter of the variational quantum circuit by measuring and extremising a cost or loss function value.

9. The method as claimed in any one of the preceding claims, the method further comprising:

receiving or determining a transform quantum circuit comprising gate operations configured to map a computational basis state to a Chebyshev basis state; and
executing the gate operations of the transform quantum circuit.

10. A method for executing a Chebyshev transform on a quantum register of a hybrid quantum computer system, the method comprising:

preparing the quantum register in a first state representing a computational basis state;
receiving or determining a transform quantum circuit comprising gate operations on quantum elements of the quantum register, the transform quantum circuit comprising gate operations configured to map a computational basis state to a Chebyshev basis state, preferably a unitary representation of the transform quantum circuit $\hat{U}_{\mathrm{QChT}}$ being given by

$$\hat{U}_{\mathrm{QChT}} = \sum_{j=0}^{N-1} \left| \tau\!\left(x_j^{\mathrm{Ch}}\right) \right\rangle \langle j |$$

wherein $N$ represents a number of basis states, $\left| \tau\!\left(x_j^{\mathrm{Ch}}\right) \right\rangle$ represents a Chebyshev basis state with index $j$, and $\langle j |$ represents a computational basis state with index $j$; and
executing the gate operations of the transform quantum circuit, the execution of the gate operations including translating the gate operations into control signals for controlling the quantum elements of the quantum register and, optionally, for readout of the quantum elements to obtain hardware measurement data.

11. The method as claimed in claim 10, wherein the Chebyshev basis is defined on the roots grid, wherein the transform quantum circuit defines gate operations on data quantum elements in the first state and on a quantum element that is used as an ancilla for the data quantum elements, and wherein the transform quantum circuit comprises:

a first sub-circuit for creating a Bell state between the ancilla qubit and the data qubits;
a second sub-circuit for transforming from real space to spectral space;
a third sub-circuit for making the relative phases between all basis states either purely real or purely imaginary;
a fourth sub-circuit for permuting the data qubits to reorder amplitudes of the conditioned states; and/or
a fifth sub-circuit for making the relative phases between all basis states either purely real or purely imaginary.

12. The method as claimed in claim 10, wherein the Chebyshev basis is defined on the extrema grid, wherein the transform quantum circuit defines gate operations on data quantum elements in the first state and on a quantum element that is used as an ancilla for the data quantum elements, and wherein the transform quantum circuit comprises:

a first sub-circuit for making the relative phases between all basis states either purely real or purely imaginary;
a second sub-circuit for permuting the data qubits;
a third sub-circuit for transforming from real space to spectral space;
a fourth sub-circuit for permuting the data qubits; and/or
a fifth sub-circuit for making the relative phases between all basis states either purely real or purely imaginary.

13. A method for executing an inverse Chebyshev transform on quantum register of a hybrid quantum computer system, the method comprising:

preparing the quantum register in a first state representing a Chebyshev basis state;
receiving or determining an inverse transform quantum circuit comprising gate operations on quantum elements of the quantum register, the inverse transform quantum circuit comprising gate operations configured to map a Chebyshev basis state to a computational basis state, preferably a unitary representation of the inverse transform quantum circuit $\hat{U}_{\text{iQChT}}$ being given by

$$\hat{U}_{\text{iQChT}} = \sum_{j=0}^{N-1} |j\rangle \langle \tau(x_j^{\text{Ch}})|$$

wherein $N$ represents the number of basis states, $|j\rangle$ represents a Chebyshev basis state with index $j$, and $\langle \tau(x_j^{\text{Ch}})|$ represents a computational basis state with index $j$; and
executing the gate operations of the inverse transform quantum circuit, the execution of the gate operations including translating the gate operations into control signals for controlling the quantum elements of the quantum register and, optionally, for readout of the quantum elements to obtain hardware measurement data.

14. The method as claimed in claim 13, wherein the unitary representation of the inverse transform quantum circuit is equivalent to the Hermitian conjugate of the unitary representation of the transform quantum circuit according to any one of claims 10-12.

15. The method as claimed in any one of the preceding claims,

wherein applying a quantum circuit to the quantum register comprises translating the quantum circuit into a sequence of signals and using the sequence of signals to operate the qubits in the quantum register of the quantum processor; and/or,
wherein receiving hardware measurement data comprises applying a read-out signal to qubits of the quantum processor and, in response to the read-out signal, measuring quantum hardware measurement data.

16. The method as claimed in any of the preceding claims, wherein the hybrid quantum computer includes a gate-based qubit device, a digital/analog quantum device, a neutral-atom-based quantum device, an optical qubit device and/or a gaussian boson sampling device.

17. A hybrid quantum computer system comprising a classical computer system and a quantum register, the hybrid quantum computer system being configured for:

receiving or determining, by the classical computer system, one or more quantum circuits comprising gate operations on quantum elements of the quantum register, one or more quantum circuits including:

- a Chebyshev feature map comprising gate operations for encoding one or more input features x, for example one or more data points or function variables, associated with the computational problem in the Hilbert space of the quantum elements of the quantum register, the gate operations being configured to encode the one or more classical input features x in amplitudes of a set of orthogonal basis states of the quantum register, wherein the amplitudes are based on one or more Chebyshev polynomials of order $k$, $T_k(x)$, $k = 0, ..., N - 1$ wherein $N$ is a number of available basis states of the quantum register;
- a further quantum circuit, for example a variational quantum circuit, comprising gate operations determined by the computational problem;

executing, by the classical computer system, the gate operations of the quantum circuit, the execution of the gate operations including translating the gate operations into control signals for controlling the quantum elements of the quantum register and for readout of the quantum elements to obtain hardware measurement data; and determining, by the classical computer system, information associated with a solution to the computational problem based on the hardware measurement data.

18. A hybrid quantum computer system comprising a classical computer system and a quantum register, the hybrid quantum computer system being configured for:

preparing the quantum register in a first state representing a computational basis state and receiving or determining a transform quantum circuit comprising gate operations on quantum elements of the quantum register, the transform quantum circuit comprising gate operations configured to map a computational basis state to a Chebyshev basis state; or
preparing the quantum register in a second state representing a Chebyshev basis state and receiving or determining an inverse transform quantum circuit comprising gate operations on quantum elements of the quantum register, the inverse transform quantum circuit comprising gate operations configured to map a Chebyshev basis state to a computational basis state; and
executing the gate operations of the transform quantum circuit, the execution of the gate operations including translating the gate operations into control signals for controlling the quantum elements of the quantum register and, optionally, for readout of the quantum elements to obtain hardware measurement data.

19. A computer program or suite of computer programs comprising at least one software code, the software code portion configuring, when run on a hybrid quantum computer system, the hybrid quantum computer system to execute the method steps as claimed in any one of claims 1-16.

20. A non-transient storage medium storing the computer program or suite of computer programs as claimed in claim 19.

Fig. 1C

Fig. 1D

Fig. 1A

Fig. 1B

EP 4 485 293 A1

Chebyshev amplitude space

204

j=0                    N−1

computational space

202

j=0                    N−1

206

N−1

Fourier
space

j=0

208

N−1

Chebyshev
phase space

j=0

**Fig. 2A**

orthonormal
Chebyshev
basis

**Fig. 2B**

| determine or receive problem description |
| --- |
| 302      describing a computational problem |

| determine or receive one or more data points |
| --- |
| 304      related to the computational problem |

formulate an encoding quantum circuit to encode the one or more data points in a Hilbert space of the quantum register, the quantum circuit being configured to encode, for each of the one or more data points $x$, the value $\alpha\, T_k(x), k = 0, \dots, N - 1$ in the amplitude of the $k^{\text{th}}$ basis state of the quantum register, wherein $T_k$ represents a $k^{\text{th}}$ Chebyshev polynomial, and 306    wherein $\alpha$ is a normalisation factor

308 — apply the encoding quantum circuit to the quantum register

| formulate one or more additional quantum circuits, |
| --- |
| 310      based on the problem description |

| apply the one or more additional quantum circuits |
| --- |
| 312      to the quantum register |

| receive measurement data representative of |
| --- |
| 314      the state of the quantum register |

| determine a solution to the computational problem, |
| --- |
| 316      based on the measurement data |

# Fig. 3

## Fig. 4B

$|0\rangle$ — $H$ — $P_{2^1}(x)$ —

$|0\rangle$ — $H$ — $P_{2^2}(x)$ —

... ... ...

$|0\rangle$ — $H$ — $P_{2^n}(x)$ —

$$\frac{1}{\sqrt{N}}\begin{bmatrix} 1 \\ e^{i\,1x} \\ e^{i\,2x} \\ \dots \\ e^{i\,(N-1)x} \end{bmatrix}$$

## Fig. 4C

$|0\rangle$ — $H$ — $P_{2^1}(\arccos x)$ —

$|0\rangle$ — $H$ — $P_{2^2}(\arccos x)$ —

... ... ...

$|0\rangle$ — $H$ — $P_{2^n}(\arccos x)$ —

$$\frac{1}{\sqrt{N}}\begin{bmatrix} 1 \\ e^{i\,1\,\arccos x} \\ e^{i\,2\,\arccos x} \\ \dots \\ e^{i\,(N-1)\,\arccos x} \end{bmatrix}$$

## Fig. 4A

$$\frac{1}{\sqrt{N}}\begin{bmatrix} \frac{1}{\sqrt{2}}T_0(x) \\ T_1(x) \\ T_2(x) \\ \dots \\ T_{N-1}(x) \end{bmatrix}$$

$$\tilde{P}_{2^j}^{s}(x) = P_{2^j}(s\arccos x) = \mathrm{diag}\left[1, \exp\left(i\,s\,\frac{N}{2^j}\arccos x\right)\right]$$

Fig. 5A

Fig. 5B

EP 4 485 293 A1

**Fig. 6A**

**Fig. 6B**

**Fig. 7A**

**Fig. 7B**

EP 4 485 293 A1

**Fig. 8A**

$$f(x) = \mathrm{Re}\left(\langle\emptyset|\hat{U}_\theta\,\hat{U}_\tau(x)|\emptyset\rangle\right)$$

**Fig. 8B**

$$\mathrm{d}f(x)\big/_{\mathrm{d}x} = \mathrm{Re}\left(\langle\emptyset|\hat{U}_\theta\,\hat{G}_{\mathrm{eff}}\,\hat{U}_\tau(x)|\emptyset\rangle\right)$$

**Fig. 8C**

$$\sum_{l\,\in\,\mathrm{gates}}$$

$$\mathrm{d}f(x)\big/_{\mathrm{d}x} = \Sigma_{l\in\mathrm{gates}}\,\mathrm{Re}\left(\langle\emptyset|\hat{U}_\theta\,\hat{U}_\tau^{(l)}(x)|\emptyset\rangle\right)$$

Parameter-Shift Rule (PSR):
Shift single-qubit gates, one gate per
circuit, and sum the results from all circuits

**Fig. 9A**

**Fig. 9B**

EP 4 485 293 A1

Fig. 10A

Fig. 10B

Fig. 11A

Fig. 11B

Fig. 11C

Fig. 12A

**Fig. 12B**

**Fig. 12E**

**Fig. 12C**

(a) Digital processing

12312

$P(\frac{\pi}{2})$  $H$  $H$  $H$

$H$

$P(\frac{\pi}{2})$  $P(\frac{\pi}{4})$

$|0\rangle$  $|0\rangle$  $|0\rangle$  $|0\rangle$  $|0\rangle$

1240

(b) Analog processing

1246

$i\hbar\dfrac{d|\psi\rangle}{dt} = \mathcal{H}|\psi\rangle$

1242

$|0\rangle$  $|0\rangle$  $|0\rangle$  $|0\rangle$  $|0\rangle$

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

1244

(c) Analog – digital processing

$1246_1$ digital  $1246_2$ digital  $1246_3$ digital

analog $12412_1$  analog $12412_2$

$|0\rangle$  $|0\rangle$  $|0\rangle$  $|0\rangle$

Fig. 12D

**Fig. 13A**

**Fig. 13B**

**Fig. 13C**

**Fig. 14A**

1402  1404  1406  1408  1410  1412  1408  1414

1400

**Fig. 14B**  1402  1404  1406  1408  1414

1418

**Fig. 15A**

**Fig. 15B**

**Fig. 16**

## Fig. 17A

1712

1702

### quantum computer

| quantum processor 1708 | control and interface 1710 |

1704

### classical computer

quantum circuit generator 1707

1706

1714

EP 4 485 293 A1

## Fig. 17B

1706

| 1732 | 1734 | 1736 |

1726

1722

1728

1738

1730

1724

## EUROPEAN SEARCH REPORT

**Application Number**

EP 23 18 2499

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLEKSANDR KYRIIENKO ET AL: "Solving nonlinear differential equations with differentiable quantum circuits", ARXIV.ORG, CORNELL UNIVERSITY LIBRARY, 201 OLIN LIBRARY CORNELL UNIVERSITY ITHACA, NY 14853, 18 May 2021 (2021-05-18), XP081951791, DOI: 10.1103/PHYSREVA.103.052416 * abstract * * page 1, left-hand column, line 1 – page 18, right-hand column, line 9 * | 1-20 | INV. G06N10/60 G06N10/20 ADD. G06N3/0475 G06N3/065 G06N3/08 |
| A | Kyriienko Oleksandr ET AL: "Protocols for Trainable and Differentiable Quantum Generative Modelling", , 16 February 2022 (2022-02-16), XP055980124, Retrieved from the Internet: URL:https://arxiv.org/pdf/2202.08253.pdf [retrieved on 2022-11-10] * abstract * * page 1, left-hand column, line 1 – page 15, left-hand column, line 6 * | 1-20 | |
| A | ANNIE E PAINE ET AL: "Quantum Quantile Mechanics: Solving Stochastic Differential Equations for Generating Time-Series", ARXIV.ORG, CORNELL UNIVERSITY LIBRARY, 201 OLIN LIBRARY CORNELL UNIVERSITY ITHACA, NY 14853, 3 October 2021 (2021-10-03), XP091069400, * abstract * * page 1, left-hand column, line 1 – page 9, right-hand column, last line * * page 13, left-hand column, line 1 – page 16, left-hand column, last line * | 1-20 | **TECHNICAL FIELDS SEARCHED (IPC)** G06N |

-/--

The present search report has been drawn up for all claims

| Place of search | Date of completion of the search | Examiner |
|---|---|---|
| The Hague | 1 December 2023 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 23 18 2499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | CHELSEA A WILLIAMS ET AL: "Quantum Chebyshev Transform: Mapping, Embedding, Learning and Sampling Distributions", ARXIV.ORG, CORNELL UNIVERSITY LIBRARY, 201 OLIN LIBRARY CORNELL UNIVERSITY ITHACA, NY 14853, 29 June 2023 (2023-06-29), XP091550452, * abstract * * page 1, left-hand column, line 1 – page 5, right-hand column, last line * * page 8, left-hand column, line   – right-hand column, last line *  ----- | 1-20 | |

**TECHNICAL FIELDS SEARCHED (IPC)**

The present search report has been drawn up for all claims

| Place of search | Date of completion of the search | Examiner |
|---|---|---|
| The Hague | 1 December 2023 | Totir, Felix |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022101483 A1

- EP 2023052998 W

**Non-patent literature cited in the description**

- **M. SCHULD et al.** Quantum machine learning in feature Hilbert spaces. *Phys. Rev. Lett.*, 2019, vol. 122, 040504
- **KLAPPENECKER et al.** Discrete Cosine Transforms on Quantum Computers. *IEEE R8-EURASIP Symposium on Image and Signal Processing and Analysis (Pula, Croatia*, 2001, 464-468

- **CHILDS et al.** Quantum algorithm for systems of linear equations with exponentially improved dependence on precision. *SIAM Journal on Computing*, 2017, vol. 46, 1920-1950
- **KYRIIENKO et al.** Generalized quantum circuit differentiation rules. *Phys. Rev. A*, vol. 104, 052417